# EUROPEAN PATENT APPLICATION

(11) **EP 2 538 682 A2**
(43) Date of publication of application: **26.12.2012**
(21) Application number: 11010050.0
(22) Date of filing: 21.12.2011
(51) Int. Cl.: H04N 13/00

(54) **Apparatus and method for controlling display of information**

(30) Priority: 20.06.2011 KR 20110059525
(71) Applicant: LG ELECTRONICS INC., Yeongdeungpo-Gu Seoul 150-721 (KR)
(72) Inventor: Kim, Jonghwan, Kumchon-gu,Seoul 153-801 (KR)
(74) Representative: Beyer, Andreas

(57) **Abstract**

A mobile terminal includes a display unit configured to display a screen including a plurality of objects, a memory configured to store a reference value referred to weight value recognition of the objects, and a controller (180) configured to control an operation associated with the objects, **characterized in that** the controller configured to recognize weight values of the objects based on the reference value and to assign a three dimensional (3D) effect indicating the recognized weight values of the objects to the screen.

## Description

### 1. Field

One or more embodiments described herein relate to controlling the display of three-dimensional information.

### 2. Background

A terminal is a device configured to perform various functions. Examples include data and voice communications, capturing images and video via a camera, recording audio, playing music files and outputting music via a speaker system, and displaying images and video on a display. Some terminals include additional functionality which supports game playing, while other terminals are configured as multimedia players.

More recently, terminals have been configured to receive broadcast and multicast signals which permit viewing of content such as videos and television programs. In spite of their enhanced functionality, these terminals still have drawbacks.

### BRIEF DESCRIPTION OF THE DRAWINGS

FIG. 1 shows one embodiment of a mobile terminal.

FIGS. 2A and 2B show front and rear views of the mobile terminal.

FIG. 3 explains the principle of binocular disparity.

FIG. 4 provides an explanation of distance and 3D depth perception.

FIG. 5 shows one way of implementing a 3D stereoscopic image in a parallax barrier-type display unit.

FIG. 6 shows a process for setting at least one reference value to be used in acquiring weight values of objects within a specific function screen.

FIGs. 7 to 9 show various screen configurations for the process of FIG. 6.

FIG. 10 shows a process for giving 3D effect to discriminate weight values of objects within a specific function screen.

FIGs. 11 to 30 show screen configurations for the process of FIG. 10.

### DETAILED DESCRIPTION

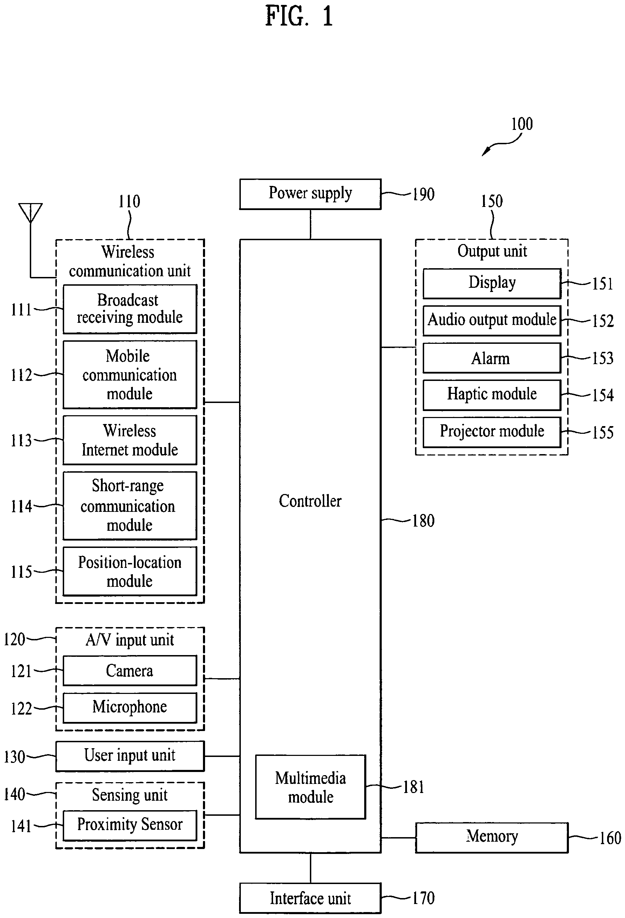

FIG. 1 shows one embodiment of a mobile terminal 100 which includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence. First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel. The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

At least two broadcast receiving modules 111 can be provided to the mobile terminal 100 in pursuit of simultaneous receptions of at least two broadcast channels or broadcast channel switching facilitation.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

Moreover, the mobile communication module 112 transmits current position information of the mobile terminal obtained via a position-location module 115, which will be described later, to an external server (not shown in the drawing) and is then able to receive or download data relevant to an area, in which the mobile terminal 100 is located, from the external server.

In this case, detailed map data of the area can be included in the data as well as an image representing the area where the mobile terminal 100 is located.

Moreover, an object information database relevant to objects located within a specific radius of the area can be included in the map data. In this case, the objects can include buildings and the like for example. And, the objects can include hospital, restaurant, toilet, police station, community center and the like, which are located within the buildings.

A real image of each area, position information of objects included within the real image and detailed information on the objects are included in the map data. In this case, the real image can include an image having the same view of a preview image inputted via the camera 121 or an image corresponding to a sky view.

The wireless Internet module 113 supports Internet access for the mobile terminal 100. The wireless Internet module 113 may be internally or externally coupled to the mobile terminal 100. Suitable technologies for wireless Internet include, but are not limited to, WLAN (Wireless LAN), Wi-Fi®, Wibro® (Wireless broadband), Wimax® (World Interoperability for Microwave Access), and HSDPA (High Speed Downlink Packet Access). The wireless Internet module 113 may be replaced with a wired Internet module (not shown) in non-mobile terminals. The wireless Internet module 113 and the wired Internet module may be commonly referred to as an Internet module.

Moreover, as mentioned in the foregoing description, the wireless internet module 113 can receive or download the data relevant to the area, in which the mobile terminal 100 is located, from the external server.

The short-range communication module 114 facilitates relatively short-range communications. Suitable technologies for short-range communication include, but are not limited to, radio frequency identification (RFID), infrared data association (IrDA), ultra-wideband (UWB), as well as networking technologies such as Bluetooth® and ZigBee®.

Moreover, as mentioned in the foregoing description, the short-range communication module 114 is able to receive or download the data relevant to the area, in which the mobile terminal 100 is located, from the external server of another terminal located in the vicinity of the mobile terminal 100.

The position-location module 115 identifies or otherwise obtains a location of the mobile terminal 100. The position-location module 115 may obtain position information by using a global navigation satellite system (GNSS). The GNSS is a term used to describe radio navigation satellite systems configured to send reference signals capable of determining their positions on the surface of the earth or near the surface of the earth while revolving around the earth. The GNSS includes: a global position system (GPS) operated by the U.S.A.; Galileo, operated by Europe; a global orbiting navigational satellite system (GLONASS) operated by Russia; COMPASS, operated by China; and a quasi-zenith satellite system (QZSS) operated by Japan.

As a typical example of the GNSS, the position-location module 115 is a GPS module. The position-location module 115 may calculate information related to distances between one point or object and at least three satellites and information related to the time when the distance information was measured and apply trigonometry to the obtained distance information to obtain three-dimensional position information on the point or object according to the latitude, longitude, and altitude at a predetermined time. Furthermore, a method of calculating position and time information using three satellites and correcting the calculated position and time information using another satellite may also used. The position-location module 115 continues to calculate a current position in real time and to calculate velocity information based on the position information.

With continued reference to FIG. 1, the audio/video (A/V) input unit 120 may be configured to provide audio or video signal input to the mobile terminal 100. The A/V input unit 120 may include a camera 121 and a microphone 122. The camera 121 processes image frames of still pictures or video obtained by an image sensor in a photographing mode or a video telephony mode. The processed image frames may be displayed on a display unit 151.

The image frames processed by the camera 121 may be stored in the memory 160 or transmitted to an external device through the wireless communication unit 110. Optionally, the mobile terminal 100 can include two or more cameras 121, if appropriate. In this case, at least two cameras 121 can be provided according to user environment.

For instance, the camera 121 can include a first camera 121 a and a second camera 121 b provided for 3D image photographing to a face opposite to another face on which the display unit 151 of the mobile terminal 100 is loaded. And, a third camera 121c for user's self-photographing can be provided to a prescribed region of the face provided with the display unit 151 of the mobile terminal 100.

In this case, the first camera 121a is provided for photographing a left eye image as a source image of a 3D image, while the second camera 121 b is provided for photographing a right eye image as a source image of the 3D image, for example.

The microphone 122 receives an external audio signal while the mobile terminal 100 is in a particular mode, such as a phone call mode, a recording mode and/or a voice recognition mode. The received audio signal is processed and converted into digital data. In the call mode, the processed digital data is transformed into a format transmittable to a mobile communication base station via the mobile communication module 112 and then output. Furthermore, the mobile terminal 100, and in particular the A/V input unit 120, may include a noise removing algorithm to remove noise generated during the course of receiving the external audio signal.

The user input unit 130 generates input data in response to user manipulation of an associated input device or devices. Examples of such devices include a keypad, a dome switch, a touchpad (e.g., static pressure/capacitance), a jog wheel and a jog switch. A specific example of the user input unit 130 is a touch screen in which a touchpad is combined with a display, as will be described below.

The sensing unit 140 provides status measurements of various aspects of the mobile terminal 100. For example, the sensing unit 140 may detect an open/closed status of the mobile terminal 100, relative positioning of components (e.g., a display and a keypad) of the mobile terminal 100, a change of position of the mobile terminal 100 or a component of the mobile terminal 100, a presence or absence of user contact with the mobile terminal 100, an orientation of the mobile terminal 100 and/or acceleration/deceleration of the mobile terminal 100.

As an example, the mobile terminal 100 may be configured as a slide-type mobile terminal in which the sensing unit 140 may sense whether a sliding portion of the mobile terminal 100 is open or closed. The sensing unit 140 may also sense a presence or absence of power provided by the power supply unit 190 or a presence or absence of a coupling or other connection between the interface unit 170 and an external device. The sensing unit 140 may include a proximity sensor 141.

The output unit 150 generates output relevant to the senses of sight, hearing and touch. The output unit 150 may include a display unit 151, an audio output module 152, an alarm 153, a haptic module 154, and a projector module 155.

The display unit 151 displays information processed by the mobile terminal 100. For example, when the mobile terminal 100 is in a call mode, the display unit 151 may display a user interface (UI) or a graphic user interface (GUI) associated with the call. If the mobile terminal 100 is in a video communication mode or a photograph mode, the display unit 151 may display a photographed and/or received picture, a UI or a GUI.

The display unit 151 may include a liquid crystal display (LCD), a thin film transistor liquid crystal display (TFT LCD), an organic light-emitting diode (OLED), a flexible display, or a 3-dimensional display. The mobile terminal 100 may include one or more of such displays.

The display unit 151 may have a transparent or light-transmittive type configuration, hereinafter referred to as a transparent display. A transparent OLED (TOLED) is an example of a transparent display. A rear configuration of the display unit 151 may also have the light-transmittive type configuration. In this configuration, a user is able to see an object located behind the terminal body via the area occupied by the display unit 151 of the terminal body.

At least two display units 151 may be provided. For example, a plurality of display units 151 may be provided on a single face of the mobile terminal 100 spaced apart from each other or built in one body. Alternatively, each of a plurality of display units 151 may be provided on different faces of the mobile terminal 100.

If the display unit 151 and a sensor for detecting a touch action (hereafter referred to as a 'touch sensor') are constructed in a mutual-layered structure (hereafter referred to as a 'touch screen'), the display unit 151 may be used as an input device and an output device. For example, the touch sensor may include a touch film, a touch sheet or a touchpad.

The touch sensor can be configured to convert a pressure applied to a specific portion of the display unit 151 or a variation of electrostatic capacity generated from a specific portion of the display unit 151 to an electric input signal. The touch sensor may detect a pressure of a touch as well as a touched position or magnitude of the touch.

If a touch input is made to the touch sensor, a signal(s) corresponding to the touch input is transferred to a touch controller (not shown). The touch controller processes the signal(s) and then transfers corresponding data to the controller 180. The controller 180 may determine, therefore, which portion of the display unit 151 is touched.

With continued reference to FIG. 1, a proximity sensor 141 can be provided within the mobile terminal 100 enclosed by the touch screen or around the touch screen. The proximity sensor 141 may detect a presence or non-presence of an object approaching a specific detecting surface or an object existing around the proximity sensor 141 using an electromagnetic field strength or infrared ray without mechanical contact. Accordingly, the proximity sensor 141 may have greater durability and greater utility than a contact type sensor.

The proximity sensor 141 can include a transmittive photoelectric sensor, a direct reflective photoelectric sensor, a mirror reflective photoelectric sensor, a radio frequency oscillation proximity sensor, an electrostatic capacity proximity sensor, a magnetic proximity sensor or an infrared proximity sensor. If the touch screen is an electrostatic type touch screen, the proximity sensor 141 may detect proximity of a pointer using a variation of an electric field according to the proximity of the pointer and the touch screen (touch sensor) may be classified as the proximity sensor 141.

An action in which a pointer approaches the touch screen without contacting the touch screen, yet is recognized as being located on the touch screen, is referred to as a 'proximity touch'. An action in which the pointer actually touches the touch screen is referred to as a 'contact touch'. The position on the touch screen proximity-touched by the pointer refers to the position of the pointer that vertically opposes the touch screen when the pointer performs the proximity touch.

The proximity sensor 141 may detect a proximity touch and/or a proximity touch pattern (e.g., proximity touch distance, proximity touch duration, proximity touch position, proximity touch shift state). Information corresponding to the detected proximity touch action and/or the detected proximity touch pattern may be displayed on the touch screen.

The audio output module 152 may output audio data that is received from the wireless communication unit 110 in, for example, a call-receiving mode, a call-placing mode, a recording mode, a voice recognition mode or a broadcast receiving mode. The audio output module 152 may output audio data stored in the memory 160. The audio output module 152 may output an audio signal relevant to a function (e.g., a call signal receiving sound, a message receiving sound, etc.) performed by the mobile terminal 100. The audio output module 152 may include, for example, a receiver, a speaker or a buzzer.

The alarm 153 outputs a signal for announcing an occurrence of a particular event associated with the mobile terminal 100. Typical events include a call signal reception, a message reception, a key signal input and a touch input. The alarm 153 outputs a signal for announcing the event occurrence via vibration as well as a video signal or an audio signal. The video signal is output via the display unit 151 and the audio signal is output via the audio output module 152. Hence, at least the display unit 151 or the audio output module 152 can be regarded as part of the alarm 153.

The haptic module 154 may generate various haptic effects that can be sensed by a user. Vibration is a representative tactile effect generated by the haptic module 154. Strength and pattern of the vibration generated from the haptic module 154 may be controllable. For example, vibrations differing from each other can be output by being synthesized together or can be output in sequence.

The haptic module 154 may generate various haptic effects in addition to vibration. For example, the haptic module 154 may generate an effect caused by a pin array vertically moving against skin being touched, an air injection force via an injection hole, an air suction force via a suction hole, an effect of skimming on a skin surface, an effect of contact with an electrode, an effect of electrostatic power and/or an effect of a hot/cold sense using an endothermic or exothermic device.

The haptic module 154 can be configured to provide the haptic effect via direct contact. The haptic module 154 can also be configured to enable a user to experience the haptic effect via muscular sense of a finger or an arm. Two or more haptic modules 154 can be provided according to a configuration of the mobile terminal 100.

The projector module 155 is configured to perform an image projection function. More particularly, the projector module 155 is configured to display an image that is either identical to or at least partially different from the image displayed on the display unit 151 on an external screen or wall based on a control signal from the controller 180.

The projector module 155 may include a light source (not shown) configured to generate light (e.g., a laser) for projecting an image external to the mobile terminal 100, an image producing means (not shown) for producing the image for external output using the light generated from the light source, and a lens (not shown) for enlarging the image to be output externally at a predetermined focus distance. The projector module 155 may further include a device (not shown) for adjusting a direction of the projected image by mechanically moving the lens or the entire module.

The projector module 155 may be classified as, for example, a cathode ray tube (CRT) module, a liquid crystal display (LCD) module, or a digital light processing (DLP) module based on a type of a display means. In particular, the DLP module is operated by a mechanism enabling the light generated from the light source to reflect on a digital micromirror device (DMD) chip and advantageously allows the projector module 151 to be a smaller size.

The projector module 155 may be provided in a lengthwise direction of a lateral, front or rear side of the mobile terminal 100. It is understood that the projector module 155 may be positioned at any portion of the mobile terminal 100 as necessary.

The memory 160 is generally used to store various types of data for supporting the processing, control, and storage requirements of the mobile terminal 100. Examples of such data include program instructions for applications operating on the mobile terminal 100, contact data, phonebook data, messages, audio, still pictures, and moving pictures. A recent use history or a cumulative use frequency of each data (e.g., use frequency for each phonebook, each message or each multimedia) may be stored in the memory 160. Moreover, data for various patterns of vibration and/or sound to be output when a touch input is received at the touchscreen may be stored in memory 160.

Moreover, one or more reference values referred to in recognizing weight values of specific objects are stored in the memory 160. In this case, the objects can include information displayed on a screen for executing a specific function such as content, a specific region, an icon and the like, which are included in the specific function according to one embodiment.

In particular, content may include data, provided to the mobile terminal 100 and executable and displayable in the mobile terminal 100, such as phonebook, call history, incoming/outgoing message history, email, chatting message, music file, video file, image file, schedule, document, memo, game, webpage, application, widget, home screen and the like. Also, the content can include a menu.

The objects can include specific objects within a map representing a plurality of areas, specific objects within a camera preview image for augmented reality, and information on the specific objects. For instance, a screen of the specific function can include an executed screen of an application, in which a plurality of objects are included.

For another instance, the objects can include a plurality of applications and a screen of the specific function can include a home screen, a standby screen or a menu screen, in which the applications are included.

For another instance, the objects can become a list screen or a menu screen, in which a plurality of contents are included. In this case, the contents can include a plurality of contact information and the list or menu screen can include a phonebook screen containing the contact information.

The content can include a plurality of call history information and the list or menu screen can include a call history screen containing the call history information. The content can include a plurality of incoming/outgoing message history information and the list or menu screen can include a message history screen containing the incoming/outgoing message history information.

The content can include a plurality of multimedia and the list or menu screen can include a list or menu screen containing the multimedia. The content can include a plurality of webpages and the list or menu screen can include a web browser screen containing the webpages.

The content can include a plurality of chatting counterparts for chatting and the list or menu screen can include a chatting screen containing the chatting counterparts.

For another instance, the screen of the specific function can include a map screen representing a current area or a specific area and objects within the map screen can include specific objects (e.g., buildings, parks, roads, etc.) within the map screen.

For another instance, the screen of the specific function can include a display screen of a camera preview image for augmented reality representing a current area or a specific area. And, objects within the preview image can include specific objects (e.g., buildings, parks, roads, etc.) within the preview image.

The reference value is a parameter value applicable to objects included in an executed screen of the specific function displayed on the display unit 151 or objects (not currently displayed on the display unit 151) included within the specific function in common and can be referred to for weight value acquisition of the objects. For instance, the reference value can become a meta value within meta information of the objects in common with each other.

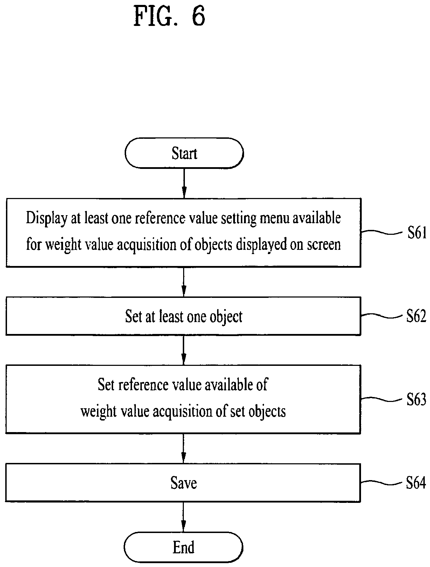

The above-described reference value may be set as a default in the memory 160 or can be set by a user in accordance with a process shown in FIGs. 6 to 9.

For instance, if the objects are objects included within an executed screen of an application, the reference value for recognizing a weight value may be one of a use frequency of the objects, a file size, an index, a generated time, a category and an index name. In particular, if the reference value is the use frequency, the mobile terminal 100 recognizes weight values of the objects within the application for the use frequency and then gives a 3D effect indicating the recognized weight value to each of the corresponding objects.

A process for setting the reference values in the memory 160 will be explained in detail later with reference to FIGs. 6 to 9.

The memory 160 can be provided with left and right eye images for the objects, which are used for 3D conversion of the objects. The left and right eye images used for the 3D conversion of the objects are obtained in a manner of being downloaded from a web via the wireless communication unit 110 or being downloaded from an external PC connected via an interface unit 170 explained later in the following description.

The left and right eye images used for the 3D conversion of the objects can be provided to the memory 160 in a manner of determining a previous image of an object as either a left eye image or a right eye image (assuming the previous image is the left eye image in the following description) and then generating the right eye image based on the determined left eye image.

The memory 160 can store an object information database for object information on an object (e.g., a building, a shop, a milestone, etc.) found using a pattern recognition information of the object within a preview image for augmented reality photographed via the camera 121 and a location information of the mobile terminal 100.

The object information can include at least one of a related text information (e.g., a building name, a shop name, etc.) of the pattern recognized object, a related link information (e.g., a link information of the building, a link information of the shop, etc.), a related image information (e.g., an image logo of the building, an image logo of the shop, etc.) (non-limited), and a related audio information (e.g., a logo song of the building, a logo song of the shop, etc.).

The object information database stored in the memory 160 may be downloaded from a database of an external server via the wireless communication unit 110 or can be updated.

In particular, the object information database stored in the memory 160 can include the whole database downloaded from the external server or can include a portion of the database downloaded from the external server in consideration of a capacity of the memory 160. The portion of the database of the external server is provided for an object situated within a predetermined distance from a current location of the mobile terminal 100 or can be provided for an object situated in a predetermined area (e.g., administrative district) related to the current location of mobile terminal 100.

The memory 160 is able to store a pattern recognition program for recognizing a pattern of an object contained in the AR (augmented reality) preview image. In particular, the pattern recognition program is executed under the control of the controller 180, recognizes a pattern of an object selected by a user from a plurality of objects contained in the preview image, generates a virtual object pattern that copies the recognized pattern of the selected object, and is able to crop the recognized pattern of the object from the preview image. And, the pattern recognition program is able to delete the recognized pattern of the object from the preview image.

The above-configured pattern recognition program may be stored in the memory 160 or can be installed in the controller 180. Hence, the controller 180 is able to perform the same operation of the pattern recognition program.

In the following description, it is assumed that the controller 180 performs the same operation of the pattern recognition program. In other embodiments, this operation may be performed by another processor or component.

The memory 160 may include, for example, a flash memory, a hard disk, a multimedia card micro type memory, a card type memory (e.g., SD memory, XD memory, etc.), a random access memory (RAM), a static random access memory (SRAM), a read-only memory (ROM), an electrically erasable programmable read-only memory (EEPROM), a programmable read-only memory(PROM), a magnetic memory, a magnetic disk or an optical disk. The mobile terminal 100 may operate in association with a web storage that performs a storage function of the memory 160 via the Internet.

The interface unit 170 couples the mobile terminal 100 with external devices. The interface unit 170 receives data from an external device. The interface unit 170 is supplied with power and may be configured to deliver the power to elements within the mobile terminal 100. The interface unit 170 may be configured to enable data to be transferred from the mobile terminal 100 to an external device. The interface unit 170 may be configured to include a wired/wireless headset port, an external charger port, a wire/wireless data port, a memory card port, a port for coupling to a device having an identity module, an audio input/output (I/O) port, a video input/output (I/O) port or an earphone port.

The identity module is a chip or card that stores various types of information for authenticating a use authority of the mobile terminal 100 and can include a user identity module (UIM), a subscriber identity module (SIM) and/or a universal subscriber identity module (USIM). A device provided with the above identity module (hereafter referred to as an 'identity device') may be manufactured in the form of a smart card. The identity device is connectable to the mobile terminal 100 via a corresponding port.

The interface unit 170 may be configured as a passage for supplying power to the mobile terminal 100 from a cradle that is connected to the mobile terminal 100. The interface unit 170 may facilitate delivery of various command signals, which are input via the cradle by a user, to the mobile terminal 100. Various command signals input via the cradle or the power may work as a signal for recognizing that the mobile terminal 100 is correctly loaded in the cradle.

The controller 180 typically controls the overall operations of the mobile terminal 100. For example, the controller 180 performs control and processing associated with voice calls, data communications and video conferences. The controller 180 may include a multimedia module 181 that provides multimedia playback. The multimedia module 181 may be configured as part of the controller 180 or may be configured as a separate component. The controller 180 may also perform pattern recognizing processing for recognizing a handwriting input performed on the touch screen as a character and/or recognizing a picture drawing input performed on the touch screen as characters or images.

The power supply unit 190 provides power required by the various components of the mobile terminal 100. The power may be internal power, external power, or combinations thereof.

At least one embodiment described herein may be partially or wholly implemented by code stored on a recording medium that can be read by a computer or a computer-like device. In other embodiments, embodiments may be implemented in hardware, or a combination of software and hardware.

For hardware implementations, arrangements and embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors or electrical units for performing other functions. Such embodiments may also be implemented by the controller 180.

For a software implementation, arrangements and embodiments described herein may be implemented with separate software modules, such as procedures and functions, each of which may perform one or more of the functions and operations described herein. Software code may be implemented with a software application written in any suitable programming language and may be stored in the memory 160 and executed by the controller 180.

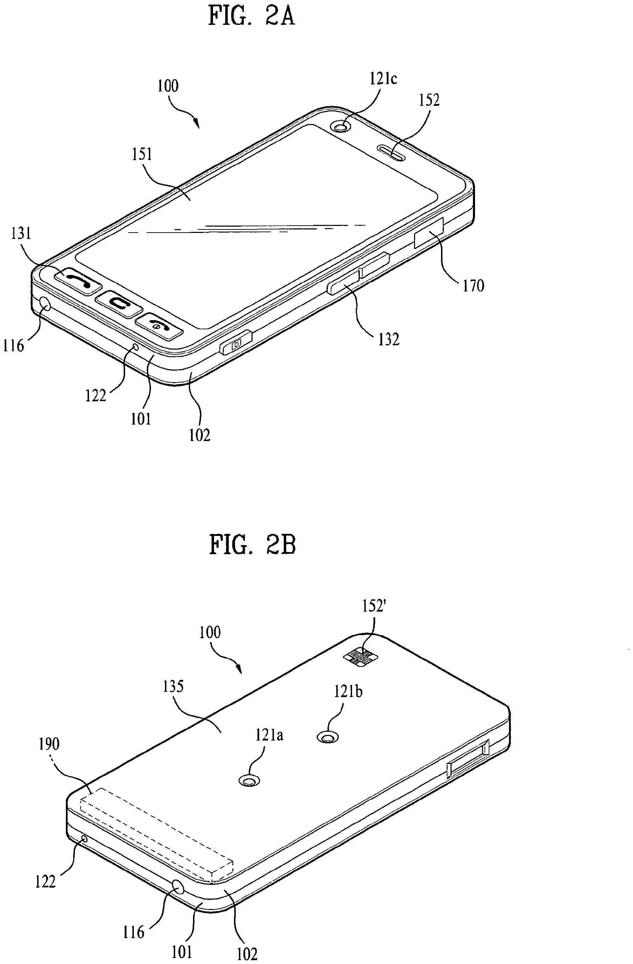

FIG. 2A shows an example of a front view of mobile terminal 100. In this example, mobile terminal 100 has a bar-type terminal body. In other embodiments, mobile terminal 100 may be implemented in other configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

As shown, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition. The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

FIG. 2B shows an example of a rear view of the terminal. This side of the terminal may include a first camera 121a and a second camera 121b for 3D image photographing can be additionally provided to a backside of the terminal body, and more particularly, to the rear case 102.

In particular, the first and second cameras 121a and 121b are arranged on the straight line within a range not to exceed user's eye distance (e.g., 6.0 ∼ 6.5 cm). And, a rail 183 enabling the first and second cameras 121 a and 121 b to move thereon is installed between the first and second cameras 121 a and 121 b.

Thus, the first and second cameras 121 a and 121 b can move to each other via the rail 183 under the control of a camera moving unit 182. In this case, the first and second cameras 121 a and 121 b enable a normal 2D image photographing as well as the 3D image function. Moreover, a mirror and flash can be further provided around the first and second cameras 121 a and 121 b (not shown in the drawing).

The flash projects light toward a subject in case of photographing the subject using the first and second cameras 121 a and 121b. In case that a user attempts to take a picture of himself (self-photographing) using the first and second cameras 121 a and 121b, the mirror enables the user to view his face reflected by the mirror.

Meanwhile, each of the first and second cameras 121a and 121b has a photographing direction substantially opposing that of the third camera 121c and may have pixels identical to or different from those of the third camera 121c. Preferably, for instance, the third camera 121 c has low pixels enough to photograph and transmit a picture of user's face for a video call and the like, while each of the first and second cameras 121 a and 121 b has high pixels for photographing a general subject without transmitting the photographed subject instantly.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display 151. In this case, if the display 151 is configured to output visual information from its both faces, it is able to recognize the visual information via the touchpad 135 as well. The information outputted from both of the faces can be entirely controlled by the touchpad 135. Alternatively, a display is further provided to the touchpad 135 so that a touchscreen can be provided to the rear case 102 as well.

The touchpad 135 is activated by interconnecting with the display 151 of the front case 101. The touchpad 135 can be provided in rear of the display 151 in parallel. The touchpad 135 can have a size equal to or smaller than that of the display 151.

In the following description, a method of controlling a 3D image in a mobile terminal is explained.

Stereoscopic images implemented on the display unit 151 of the mobile terminal 100 according to one embodiment can be mainly classified into two kinds of categories. In this case, the reference of this classification relates to whether different images are provided to both eyes, respectively. The first stereoscopic image category is described as follows,

First of all, the first category is a monoscopic scheme of providing the same image to both eyes and is advantageous in that it can be implemented with a general display unit 151. In particular, the controller 180 arranges a polyhedron generated from combining at least one of dots, lines, surfaces or combination thereof in a virtual 3D space and enables an image, which is generated from seeing the polyhedron in a specific view, to be displayed on the display unit 151. Therefore, such a 3D image can substantially include a planar image (2D image).

Secondly, the second category is a stereoscopic scheme of providing different image to both eyes, respectively, which uses the principle that a user can sense a stereoscopic effect in looking at an object with human eyes. In particular, human eyes are configured to see different planar images in looking at the same object due to a distance between both eyes. These different images are forwarded to a human brain via retinas. The human brain is able to sense depth and reality of a 3D image by combining the different images together. Therefore, the binocular disparity attributed to the distance between both of the eyes enables the user to sense the stereoscopic effect despite that there is an individual difference of the binocular disparity more or less. Therefore, the binocular disparity becomes the most important factor of the second category.

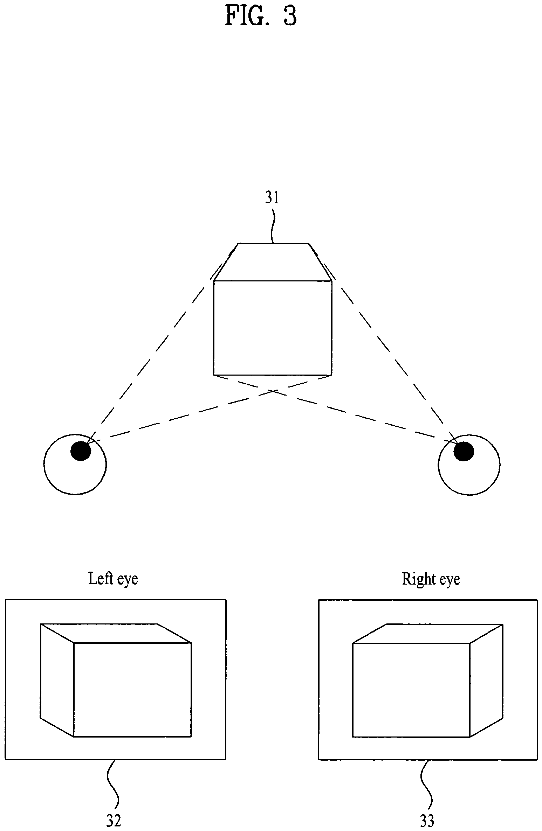

FIG. 3 is a diagram for explaining the principle of binocular disparity. Referring to FIG. 3, assume a situation that a hexahedron 31 is positioned as a subject in front below an eye's height to be seen through human eyes. In this case, a left eye is able to see a left eye planar image 32 revealing three facets including a top side, a front side and a left lateral side of the hexahedron 31 only. And, a right eye is able to see a right eye planar image 33 revealing three facets including the top side, the front side and a right lateral side of the hexahedron 31 only.

Even if a real thing is not actually positioned in front of both eyes of a user, if the left eye planar image 32 and the right eye planar image 33 are set to arrive at the left eye and the right eye, respectively, a user is able to substantially sense the hexahedron 31 as if looking at the hexahedron 31 actually.

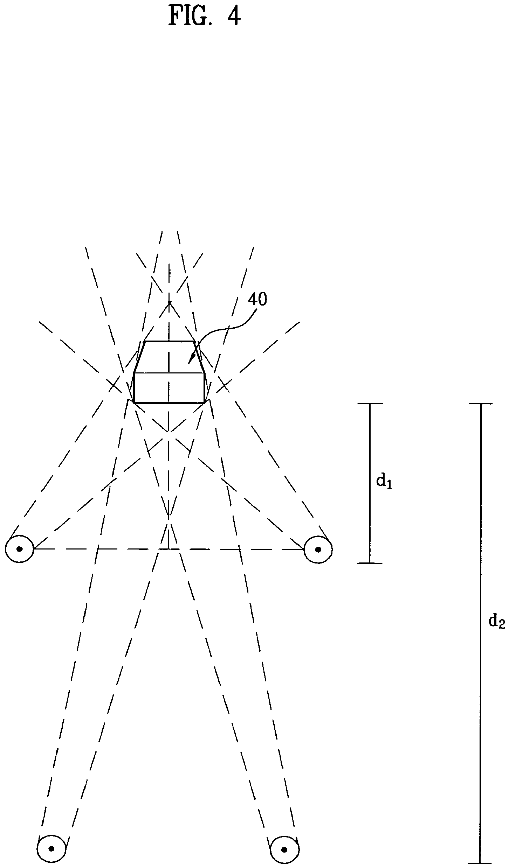

Thus, in order to implement the 3D image belonging to the second category in the mobile terminal 100, images of the same object should arrive at both eyes in a manner of being discriminated from each other for the left and right eye images of the same object with a predetermined parallax. In the following description, 3D depth attributed to the binocular disparity (parallax) is explained with reference to FIG. 4.

FIG. 4 is a diagram for concept of a sense of distance and 3D depth. Referring to FIG. 4, a lateral side ratio of an image entering each eyeball in view of a hexahedron 40 in a distance d1 trough both eyes is relatively higher than that in a distance d2, whereby a difference between images seen through both eyes increases. Moreover, an extent of a stereoscopic effect sensed by a user in view of the hexahedron 40 in the distance d1 can become higher than that in view of the hexahedron 40 in the distance d2. In particular, when a thing is seen through both eyes of a user, a closer subject gives a greater stereoscopic effect, whereas a farther subject gives a smaller stereoscopic effect. Such a difference in stereoscopic effect can be digitized into a 3D depth or a 3D level.

One embodiment of a method for implementing a 3D stereoscopic image is described as follows. In order to implement a 3D stereoscopic image, an image for a right eye and an image for a left eye need to arrive at both eyes in a manner of being discriminated from each other. For this, various methods are explained as follows.

### Parallax Barrier Scheme

The parallax barrier scheme enables different images arrive at both eyes in a manner of controlling a propagating direction of light by electronically driving a cutoff device provided between a general display and both eyes. This is explained with reference to FIG. 4 as follows.

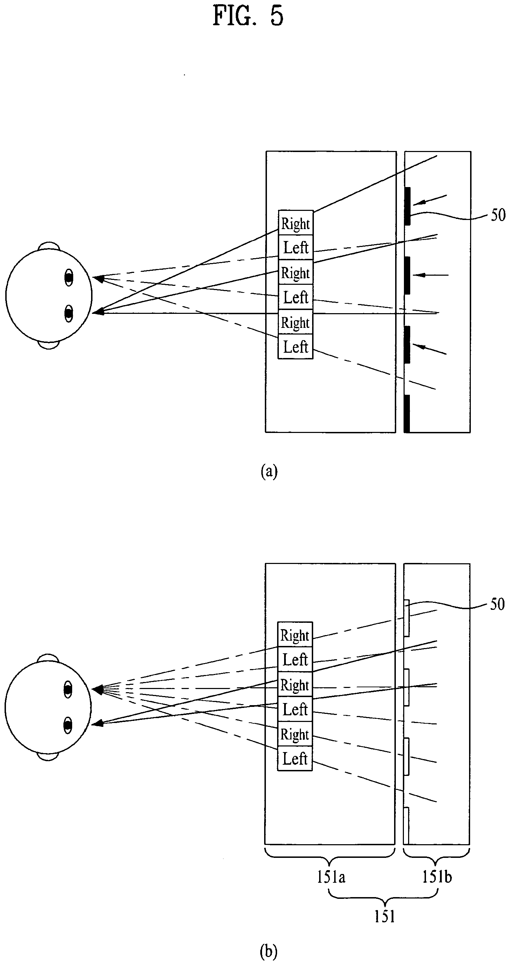

FIG. 5 is a diagram showing one way in which a 3D stereoscopic image may be implemented in a display unit of a parallax barrier type. Referring to FIG. 5, a structure of a parallax barrier type display unit 151 for displaying a 3D image can be configured in a manner that a general display device 151a is combined with a switch LC (liquid crystals) 151 b. A propagating direction of light is controlled by activating an optical parallax barrier 600, as shown in FIG. 5 (a), using the switch LC 151b, whereby the light is separated into two different lights to arrive at left and right eyes, respectively.

Thus, when an image generated from combining an image for the right eye and an image for the left eye together is displayed on the display device 151 a, a user sees the images corresponding to the eyes, respectively, thereby feeling the 3D or stereoscopic effect.

Alternatively, referring to FIG. 5 (b), the parallax barrier 600 attributed to the switch LC is electrically controlled to enable entire light to be transmitted therethrough, whereby the light separation due to the parallax barrier is avoided. Therefore, the same image can be seen through left and right eyes. In this case, the same function of a conventional display unit is available.

In particular, FIG. 5 exemplarily shows that the parallax barrier performs parallel translation in one axial direction. Alternatively, a parallax barrier may be used that enables parallel translation in at least two axial directions according to a control signal from the controller 180.

### Lenticular

The lenticular scheme relates to a method of using a lenticular screen provided between a display and both eyes. In particular, a propagating direction of light is refracted via lens on the lenticular screen, whereby different images arrive at both eyes, respectively.

### Polarized Glasses

According to the polarized glasses scheme, polarizing directions are set orthogonal to each other to provide different images to both eyes, respectively. In case of circular polarization, polarization is performed to have different rotational direction, whereby different images can be provided to both eyes, respectively.

### Active Shutter

This scheme is a sort of the glasses scheme. In particular, a right eye image and a left eye image are alternately displayed on a display unit with prescribed periodicity. And, user's glasses close its shutter in an opposite direction when an image of a corresponding direction is displayed. Therefore, the image of the corresponding direction can arrive at the eyeball in the corresponding direction. Namely, while the left eye image is being displayed, a shutter of the right eye is closed to enable the left eye image to arrive at the left eye only. On the contrary, while the right eye image is being displayed, a shutter of the left eye is closed to enable the right eye image to arrive at the right eye only.

In the following description, it is assumed that a mobile terminal according to one embodiment is able to provide a user with a 3D stereoscopic image via the display unit 151 by one of the above described methods.

Since the 3D image principle described with reference to FIG. 4 and FIG. 5 assumes a stereoscopic object, the object in a left eye image differs from the object in a right eye image in shape.

Yet, if an object is not a stereoscopic object but a planar object, a shape of the object in a left eye image is identical to that of the object in a right eye image. If a position of the object in the left eye image is different from that of the object in the right eye image, a user is able to view the corresponding object in the perspective. To help the understanding of this disclosure, assume that a stereoscopic image in the following description is a planar object. Of course, it is apparent to those skilled in the art that one or more embodiments are applicable to a stereoscopic object as well.

FIGS. 6 to 30 correspond to one embodiment of a process for recognizing weight values of objects contained in a specific function screen in accordance with at least one reference value preset in the mobile terminal 100, and for giving 3D effect indicating the recognized weight values of the objects to each of the corresponding objects.

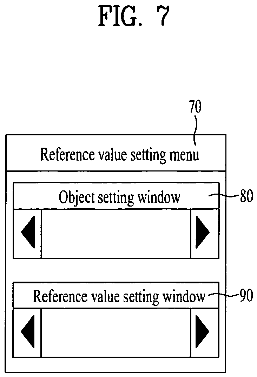

Of these figures, FIGs. 6 to 9 describe one embodiment of a process for setting a reference value to be used in recognizing weight values of objects in the function screen. More specifically, FIG. 6 is a flowchart of one embodiment of a process for setting at least one reference value used in recognizing weight values of objects within a specific function screen, and FIGs. 7 to 9 show examples screen configurations that may be used in association with this process.

Referring to FIGs. 6 to 9, if a menu function for setting a reference value is selected in accordance with a user's manipulation, the controller 180 of the mobile terminal 100 displays selected reference value setting menu 70 on the display unit [S61].

In doing so, referring to FIG. 7, the reference value setting menu 70 includes an object setting window 80 for settings of objects to apply to the at least one reference value and a reference value setting window 90 for setting at least one reference value to use for order selection of objects set via the object setting window 80.

In this case, the objects can include information displayed on a screen of a specific function such as a content contained in the screen of the specific function, a specific region within the screen of the specific function, an icon and the like.

The content may include data, which is provided to the mobile terminal 100 and is also executable and displayable in the mobile terminal 100, such as phonebook, call history, incoming/outgoing message history, email, chatting message, music file, video file, image file, schedule, document, memo, game, webpage, application, widget, home screen and the like. The content may also include a menu.

The function screen can include an executed screen of a specific application, in which a plurality of objects are included.

The function screen can include a home screen, a standby screen or a menu screen, in which the applications are included.

The function screen can include a list screen or a menu screen, in which a plurality of content is included. In this case, the content can include a plurality of contact information and the list or menu screen can include a phonebook screen containing the contact information. The content can include a plurality of call history information and the list or menu screen can include a call history screen containing the call history information. The content can include a plurality of incoming/outgoing message history information and the list or menu screen can include a message history screen containing the incoming/outgoing message history information.

Also, the content can include a plurality of multimedia and the list or menu screen can include a list or menu screen containing the multimedia. The content can include a plurality of webpages and the list or menu screen can include a web browser screen containing the webpages. The content can include a plurality of chatting counterparts for chatting and the list or menu screen can include a chatting screen containing the chatting counterparts.

The function screen can include a map screen representing a current area or a specific area and objects within the map screen can include specific target objects (e.g., buildings, parks, roads, etc.) within the map screen.

The function screen of the specific function can include a display screen of a camera preview image for augmented reality representing a current area or a specific area. And, objects within the preview image can include specific target objects (e.g., buildings, parks, roads, etc.) within the preview image.

In accordance with one embodiment, the function screen includes a plurality of objects and can include every screen capable of representing an executed status of a specific function.

A user is able to set at least one or more objects to apply to the order selection via the object setting window 80 [S62]. In doing so, if the user selects the object setting window 80, the controller 180 displays a list of objects on a screen irrespective of categories or types of the objects. The user is then able to select at least one or more desired objects from the list. Of course, the user is able to select all the objects from the list. In particular, the controller 180 recognizes the objects selected by the user from the list of the objects as objects to apply to a reference value set in the future.

If the user selects the object setting window 80, the controller 180 searches the objects for 3D effect applicable objects and then displays the found objects as a list. The user selects at least one or more desired objects from the list of the 3D effect applicable objects or is able to selects all the objects from the list.

If the user selects the object setting window 80, the controller 180 searches the objects for 3D effect applicable objects and is then able to directly recognize the found objects as objects to apply to a reference value, which will be set later, without a user's selection.

If the user selects the object setting window 80, the controller 180 displays a list of objects sorted per category or type on the screen. If a specific object is selected from the list, the controller 180 recognizes objects belonging to the type or category of the selected object as objects to apply to a reference value which will be set later. If a name of a specific category or a name of a specific type is selected from the list, the controller 180 recognizes objects belonging to the selected name of the type or category as objects to apply to a reference value which will be set later. In brief, the user selects a desired category or type from the list, thereby setting objects corresponding to the selected category or type at a time.

Subsequently, the user is able to set at least one reference value to use for weight value acquisition of the set objects via the reference value setting window 90 [S63].

In doing so, if the user selected the reference value setting window 90, the controller 180 displays a reference value inputting window for enabling the user to directly input a word corresponding to the reference value. If the user inputs the word corresponding to the reference value to set, the controller 180 is able to set the reference value to the inputted word. For instance, if the word corresponding to the set reference value is 'use frequency' and the set objects are 'applications', the controller 180 recognizes weight values of the applications for the use frequency.

While the objects are set, if the user selects the reference value setting window 90, the controller 180 searches the reference values previously set in the memory 160 for reference values applicable to the objects having been set through the object setting window 80 and is then able to display a list of the found reference values.

If at least one reference value is selected from the displayed list, the controller 180 recognizes the selected reference value(s) as reference value(s) to use for the weight value acquisition of the set objects and is then able to store the selected reference values in the memory 160.

For instance, the objects set in the step S62 and the step S63 can include objects contained in an application executed screen. And, reference values to be used for weight value acquisition of the objects contained in the application can include at least one of a use frequency of the objects, a file size, an index name, a generated time, a category and the like. In this case, the index name reference value can include an alphabetical order, Korean vowel or consonant order, a numerical order and the like for a name of each of the objects. In particular, if the index name reference value is the alphabetical order, the controller 180 recognizes the alphabetical order for the name of each of the objects.

For another instance, the objects set in the step S62 and the step S63 can include a plurality of applications contained in a standby screen or a home screen. And, reference values used for the weight value acquisition of the applications can include at least one a use frequency order, a downloaded hour order, a file size order, an index order and a category order for the applications.

For another instance, the objects set in the step S62 and the step S63 can include content contained in a list screen or a menu screen. In this case, the list or menu screen containing the contents can include a phonebook screen containing a plurality of contact information. In this case, reference values can include at least one of a use frequency order for the contact information, a character order for the contact information, an index order for the contact information and a shortcut number order for a call connection given to the contact information. In particular, the use frequency order can include a call count order, an incoming/outgoing message count, a reading count and the like for the contact information. And, the character order can include an intimacy and significance set on a character corresponding to the contact information by a user.

The list or menu screen containing the content can include a call history screen containing call history information. In this case, reference values can include at least one of a called hour order, a call traffic order, a called contact number order, a called contact name order, a call count order, and a character order corresponding to a called contact information. In particular, the call history information can include call history information related to a voice call and/or a video call.

The list or menu screen containing the contents can include a message history screen containing incoming/outgoing message history information. In this case, reference values can include at least one of a incoming/outgoing message hour order, a message sent contact number order, a message sent contact name order, a message sent count order, a message received count order, an incoming/outgoing message size order and a message category order.

In particular, the incoming/outgoing message history information can include incoming/outgoing message history information related to SMS (short message service) message, MMS (multimedia message service) message, SNS (social networking service) message, email, instant message and the like. In more particular, the call history and the incoming/outgoing message history can be integrated into one format.

The list or menu screen containing the content can include a menu screen containing multimedia. In this case, reference values can include at least one of a use frequency order, a generated hour order, a downloaded hour order, a file size order, an index order, a category order, a preference order or a presence or non-presence of favorites for the multimedia. In particular, the multimedia can include at least one of broadcast, music, video, image, document or game.

The list or menu screen containing the contents can include an alarm menu screen containing alarm setting information. In this case, reference values can include an alarm output hour order for the alarm setting information, a significance order for the alarm setting information and the like.

The list or menu screen containing the content can include a schedule menu screen containing schedule information. In this case, reference values can include at least one of a schedule content size order, a schedule output hour order and a schedule significance order for the schedule information.

And, the list or menu screen containing the contents can include a web browser screen containing webpages. In this case, reference values can include at least one of an access frequency, a category, an index order, a preference order and a presence or non-presence of favorites for the webpages.

For another instance, the objects set in the step S62 and the step S63 can include a plurality of target objects contained in a map screen representing a current or specific area and information on the target objects. In this case, reference values can include at least one of a visit count order, a proximity order to the mobile terminal, an index order, an evaluation point order and a comment number order for the target objects. In particular, the information on the target objects can include locations, contacts, evaluation points, comments, homepages and the like of the target objects.

For another instance, the objects set in the step S62 and the step S63 can include a plurality of target objects (e.g., counterparts, buildings, government and public offices, restaurants, etc.) contained in an AR (augmented reality) preview image inputted from the camera 121 or information on the target objects. In this case, reference values can include at least one of a visit count order, a proximity order to the mobile terminal, an index order, an evaluation point order, a comment number order and a recommended count for the target objects.

For another instance, the objects set in the step S62 and the step S63 can include a plurality of chatting contents contained in a chatting screen with at least one or more chatting counterparts or images set up by the chatting counterparts. In this case, reference values can include at least one of a chat count order, a recent chat date order and an intimacy order for the chatting counterparts. In particular, the chatting can include one of an SMS chatting, an MMS chatting, an SNS (social networking service) message chatting, an instant message chatting and the like.

As mentioned in the above description, if at least two objects and at least one reference value to be used for weight value acquisition of the objects are set by a user via the object setting window 80 and the reference value setting window 90, the controller 180 stores the set objects and the set at least one reference value in the memory 160 by mapping the set objects and the set at least one reference value to each other [S64].

Meanwhile, the reference values set by the process shows in FIG. 6 and FIG. 7 can be applied by being sorted per screen of each function. For instance, when 'executed screen of application' is displayed, a reference value 'use frequency' is applied. For instance, when 'executed screen of multimedia' is displayed, a reference value 'recently played order' is applied.

The reference values applied via the reference value setting window 90 are identically applicable to function screens having categories associated with each other. For instance, when 'executed screens of 1^{st} and 2^{nd} applications' are displayed, the reference value 'use frequency' is identically applied to the objects contained in the '1^{st} and 2^{nd} applications'. When 'executed screens of 1^{st} and 2^{nd} multimedia' are displayed, the reference value 'recently played order' is identically applied to the objects contained in the 'executed screens of the 1^{st} and 2^{nd} multimedia'.

The reference values applied via the reference value setting window 90 can be set by being sorted per user. In particular, users set corresponding objects and reference values via the reference value setting menu 70, subscribe information for identifications of the corresponding users, and then store the subscribed information in the memory 160, respectively. In this case, the identification information can include authentication information of the corresponding user. And, the authentication information of the corresponding user can include an ID of the corresponding user, an email address of the corresponding user and/or the like.

The reference values applied via the reference value setting window 90 can be applied by being sorted per home screen. For instance, a reference value 'played count' can be applied to '1^{st} home screen containing multimedia related applications'. And, a reference value 'intimacy' can be applied to '2^{nd} home screen containing chatting related applications'.

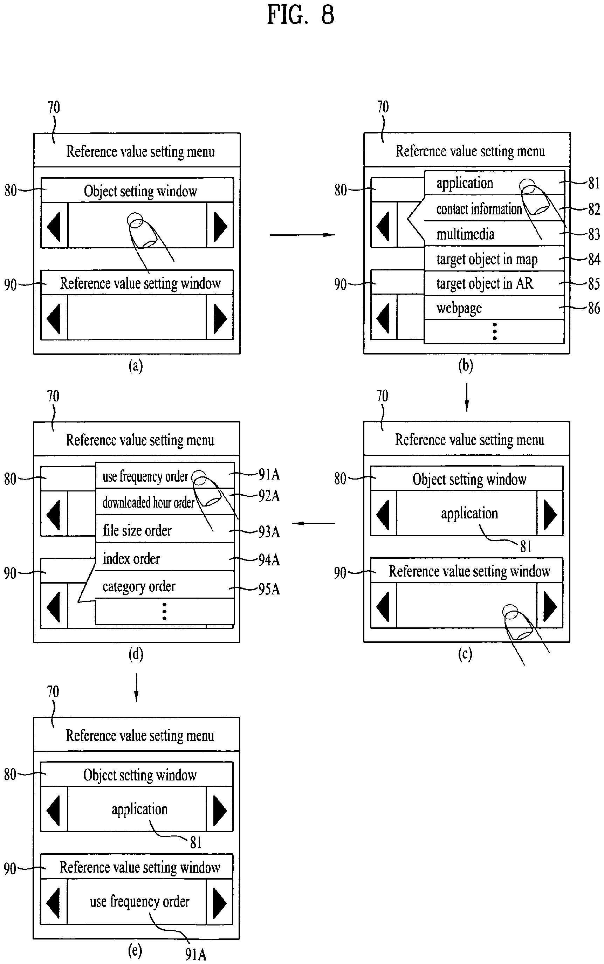

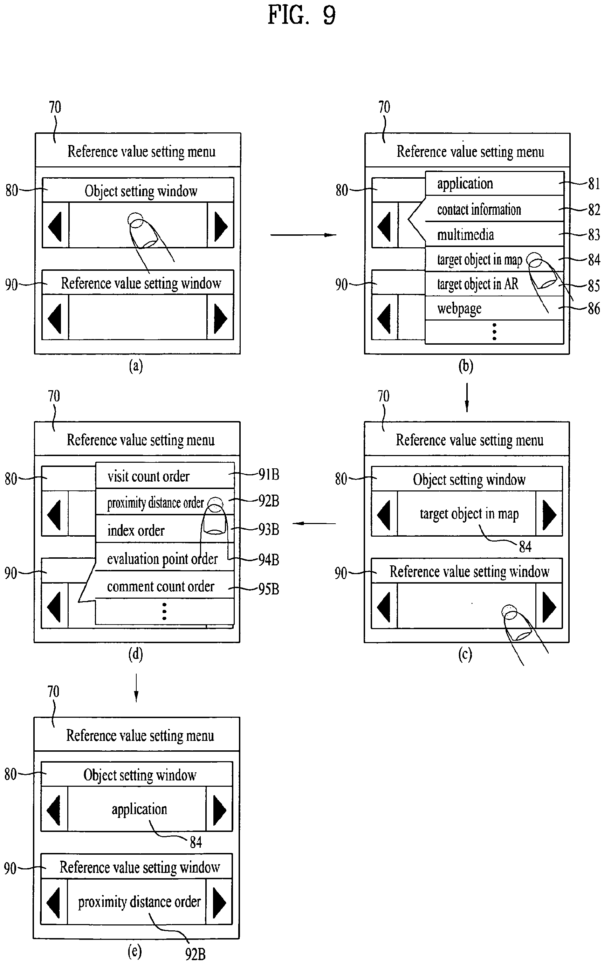

In the following description, a process for setting a reference value used for weight value acquisition of objects is explained in detail with reference to FIG. 8 and FIG. 9.

FIG. 8 shows a plurality of objects contained in a home screen and a process for setting a reference value used for weight value acquisition of the objects. Referring to FIG. 8, while the reference value setting menu 70 shown in FIG. 7 is displayed, if an object setting window 80 is selected [FIG. 8 (a)], the controller 180 sorts contents provided to the memory 160 per category and then displays a list of the sorted contents [FIG. 8 (b)].

If a user selects an application category 81 from the list, the controller 180 recognizes applications provided to the memory 160 as objects to apply to a reference value that will be set later [FIG. 8 (c)].

If the reference value setting window 90 is selected by the user, the controller 180 recognizes reference values 91A to 95A applicable to the recognized applications and then displays a list of the recognized reference values 91A to 95A [FIG. 8 (d)].

If the user selects at least one reference value ('use frequency order' 91A from the list, the controller 180 recognizes the selected reference value ('use frequency order' 91A as a reference value to use for the weight value acquisition of the applications and then stores the applications and the reference value ('use frequency order') 91A in the memory 160 by mapping them to each other [FIG. 8 (e)].

FIG. 9 shows a plurality of target objects contained in a map screen representing a current or specific area and a process for setting a reference value to use for weight value acquisition of the target objects. Referring to FIG. 9, while the reference value setting menu 70 shown in FIG. 7 is displayed, if an object setting window 80 is selected [FIG. 9 (a)], the controller 180 sorts contents provided to the memory 160 per category and then displays a list of the sorted contents [FIG. 9 (b)].

If a user selects a target object category 84 within a map screen from the list, the controller 180 recognizes target objects within the map data provided to the memory 160 as objects to apply to a reference value that will be set later [FIG. 9 (c)].

If the reference value setting window 90 is selected by the user, the controller 180 recognizes reference values 91B to 95B applicable to the recognized target object and then displays a list of the recognized reference values 91B to 95B [FIG. 9 (d)].

If the user selects at least one reference value ('proximity distance order' 92B from the list, the controller 180 recognizes the selected reference value ('proximity distance order' 92B as a reference value to use for the weight value acquisition of the target objects within the map data and then stores the target objects and the reference value ('proximity distance order') 92B in the memory 160 by mapping them to each other [FIG. 9 (e)].

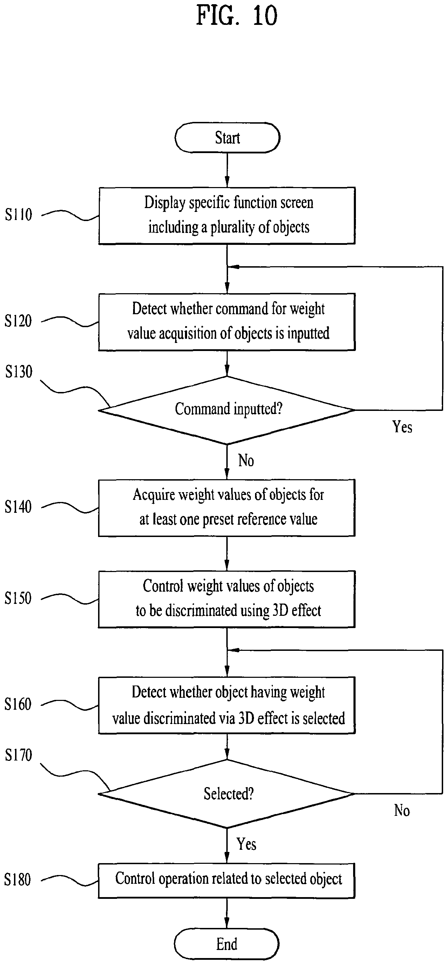

So far, the process for setting the reference value used for the weight value acquisition of the objects within the function screen is described in detail. In the following description, when the function screen containing the objects set by one of the processes shown in FIGs. 6 to 9 is displayed, a process for recognizing weight values of the objects with reference to the reference value set by one of the processes shown in FIGs. 6 to 9 and giving 3D effect to discriminate the recognized weight values of the objects is explained in detail with reference to FIGs. 10 to 30.

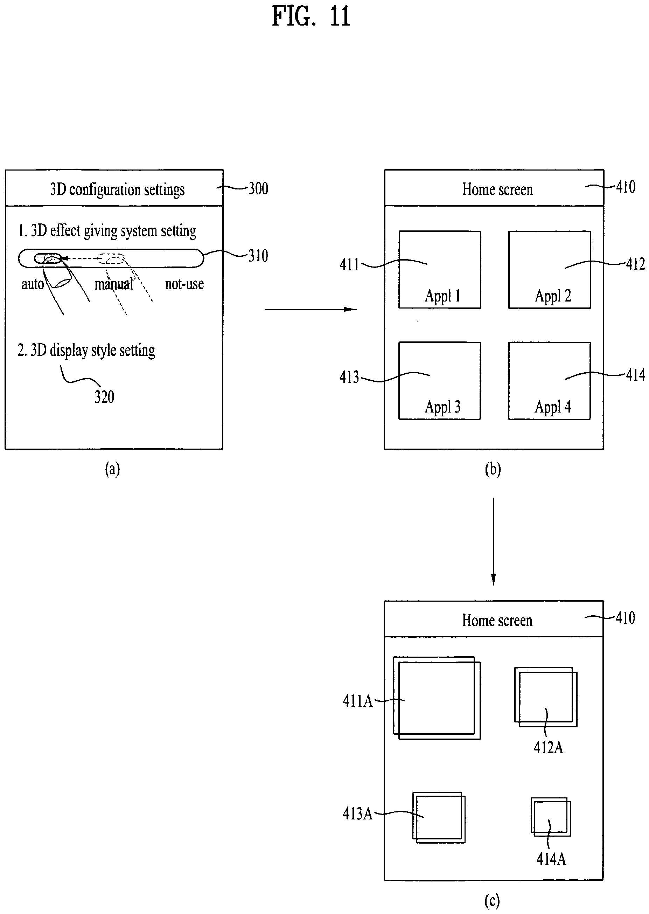

FIG. 10 is a flowchart of one embodiment of a process for giving 3D effect to discriminate weight values of objects within a specific function screen, and FIGs. 11 to 30 are examples of screen configurations for implementing the process.

Referring to FIGs. 10 to 30, when a specific function screen containing a plurality of objects is displayed [S110], the controller 180 detects whether a user command for the weight value acquisition of the objects within the function screen is inputted [S120].

In case of detecting that the order recognition command is inputted [S130], the controller searches the reference values stored in the memory 160, using, for example, the processes shown in FIGs. 6 to 9, for at least one reference value corresponding to the objects and then recognizes weight values of the objects for the found reference value [S140].

In order for a user to discriminate the recognized weight values of the objects, the controller 180 gives 3D effect indicating the corresponding weight value to the objects [S150]. In this case, as mentioned in the foregoing description with reference to FIGs. 6 to 9, the function screen containing the objects can include an executed screen of an application containing a plurality of objects.

In particular, the objects can include a plurality of applications and the executed screen of the specific function can include a home screen, a standby screen or a menu screen, in which the applications are included.

Also, the objects can be included in a list screen or a menu screen, in which a plurality of content is included. The content can include a plurality of call history information and the list or menu screen can include a call history screen containing the call history information.

The content can include a plurality of incoming/outgoing message history information and the list or menu screen can include a message history screen containing the incoming/outgoing message history information.

The content can include a plurality of multimedia and the list or menu screen can include a list or menu screen containing the multimedia.

The content can include a plurality of webpages and the list or menu screen can include a web browser screen containing the webpages.

The content can include a plurality of chatting counterparts for chatting and the list or menu screen can include a chatting screen containing the chatting counterparts.

The screen of the specific function can include a map screen representing a current area or a specific area and objects within the map screen can include specific target objects (e.g., buildings, parks, roads, etc.) within the map screen.

The screen of the specific function can include a display screen of a camera preview image for augmented reality representing a current area or a specific area. And, objects within the preview image can include specific target objects (e.g., buildings, parks, roads, etc.) within the preview image.

Without the command for the weight value acquisition of the objects in the steps S120 and S230, after the function screen has been displayed, when the objects contained in the function screen are applicable to the reference value set in the memory 160, the controller 180 automatically recognizes the weight values of the objects for the reference value and is then able to give 3D effect indicating the corresponding weight value to the objects to enable the recognized weight values of the objects to be discriminated.

The 3D effect can include a weight value identification information display method for 3D depth, 3D display size, 3D color, 3D pattern and the like. In particular, the controller 180 may provide a different 3D depth value to the objects in high order of the recognized weight values of the objects, thereby enabling a user to discriminate the weight values of the objects through the 3D depth values.

According to one example, the controller 180 may enable the display of an object having a higher or highest weight value order to appear closer to the user and enable display of an object having a lower or lowest weight value order to appear farther away from the user. Thus, the controller may provide a larger or largest 3D depth value to the object or objects having the higher or highest weight value and provide a smaller or smallest 3D depth value to the object or objects having lower or the lowest weight value.

In accordance with one embodiment, the controller 180 may determine a different 3D size of each of the objects in high order of the recognized weight values of the objects, thereby enabling a user to discriminate the weight value orders of the objects through the 3D sizes of the objects. For instance, the controller 180 enables the object having a highest weight value order to be displayed biggest in size and enables the object having a lowest weight value order to be displayed smallest in size.

The controller 180 displays the objects in high order of the recognized weight values of the objects to differ from each other in 3D display color, thereby enabling a user to discriminate the weight value orders of the objects through the 3D colors of the objects. For instance, the controller 180 enables the object having a highest weight value order to be displayed most vividly in color and enables the object having a lowest weight value order to be displayed most faintly in color.

The controller 180 gives different 3D patterns to the objects in high order of the recognized weight values of the objects, thereby enabling a user to discriminate the weight value orders of the objects through the different 3D patterns s of the objects. For instance, the controller 180 gives a most shaking 3D pattern to the object having a highest weight value order and gives a least shaking 3D pattern to the object having a lowest weight value order.

The controller 180 generates weight value identification information, to which 3D effect is given to indicate orders of the objects, instead of giving 3D effects to the objects in direct and then displays the generated weight value identification information at positions of the objects, respectively. Therefore, the controller 180 enables the weight value orders of the object to be discriminated through the weight value identification information. In this case, the 3D effect given to the weight value identification information can be equal to the 3D effect given to the objects.

In the following description, the steps S110 to S150 shown in FIG. 10 are explained in detail with reference to FIGs. 11 to 17. First, a user is able to set a system (e.g., auto, manual, not-use, etc.) for giving 3D effect to indicate weight value orders of objects within a current function screen and a display style of the 3D effect using a 3D effect configuration setting menu 300 shown in FIGs. 11 to 13.

In doing so, the controller 180 is able to provide the 3D effect configuration setting menu 300 to the function screen or a menu item of the mobile terminal. In particular, the 3D effect configuration setting menu 300 is usable by being paged within the function screen.

FIG. 11 (a) shows that a 1^{st} user interface (UI) 310 for setting a 3D effect giving system and a 2^{nd} UI 320 for setting a display style of the 3D effect to be given to the objects are contained in the 3D effect configuration setting menu 300.

The 1^{st} UI 310 provides a function of setting an automatic system, a manual system or a 'not-use' system for 3D conversion of the objects. In particular, if the automatic system is set through the 1^{st} UI 310 [FIG. 11 (a)], when the function screen 410 is displayed [FIG. 11 (b)], the controller 180 automatically searches the memory 160 for a reference value for objects 411 to 414 contained in the function screen 410.

Subsequently, the controller 180 recognizes weight value orders of the objects for the found reference value and then gives 3D effect indicating the corresponding orders to the objects [FIG. 11 (c)].

For instance, referring to FIG. 11 (b) and FIG. 11 (c), when a home screen 410 containing 1^{st} to 4^{th} applications 411 to 414 is displayed, while a reference value of the 1^{st} to 4^{th} applications 411 to 414 is 'use frequency', the orders for the reference value 'use frequency' correspond to 1^{st} application 411 > 2^{nd} application 412 > 3^{rd} application 413 > 4^{th} application 414.

In order for the 1^{st} application 411 having a highest order among the 1^{st} to 4^{th} applications 411 to 414 to be seen closest to a user, the controller 180 gives a biggest 3D depth value to the 1^{st} application 411. In order for the 4^{th} application 414 having a lowest order among the 1^{st} to 4^{th} applications 411 to 414 to be seen farthest from the user, the controller 180 gives a smallest 3D depth value to the 4^{th} application 414.

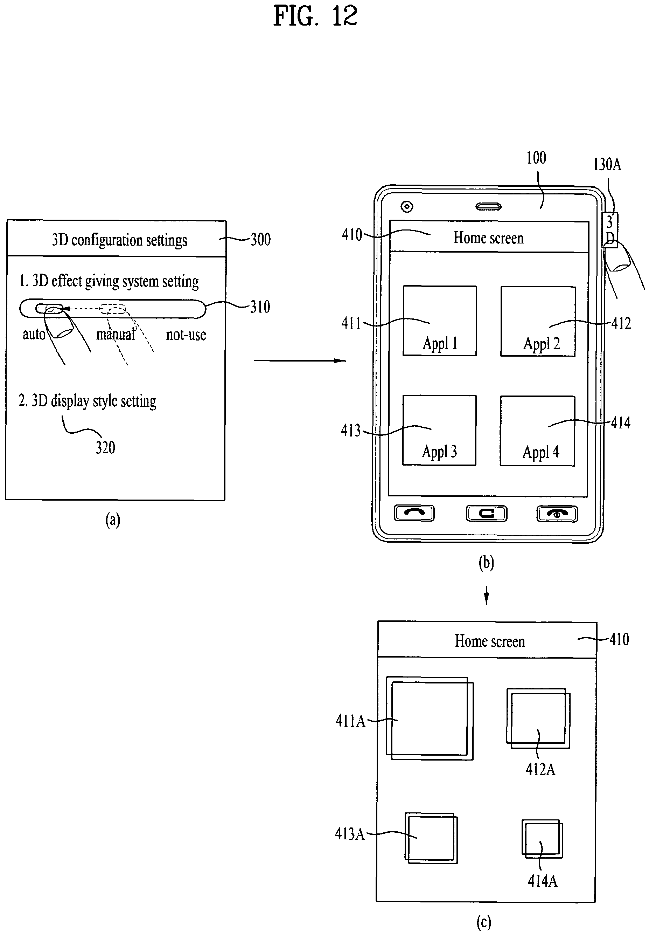

Once the manual system is set through the 1^{st} UI 310 [FIG. 12 (a)], when the command for the weight value acquisition of the objects in the steps S110 to S130 shown in FIG. 10 is inputted, the controller 180 searches a reference value for the objects 411 to 414 contained in the function screen 410 and then recognizes weight value orders of the objects for the found reference value [FIG. 12 (b)]. In order to discriminate the recognized weight value orders of the objects, the controller gives the 3D effect indicating the corresponding orders to the objects [FIG. 12 (c)].

In doing so, for example, FIG. 12 (b) shows that the command for the weight value acquisition of the objects is an input of a 3D effect giving key 130A provided to the mobile terminal 100.

After the 'not-use' system has been set through the 1^{st} UI 310, even if a function screen of objects applicable to a reference value set in the memory 160 is displayed, the controller 180 does not recognize orders of the objects for the reference value.

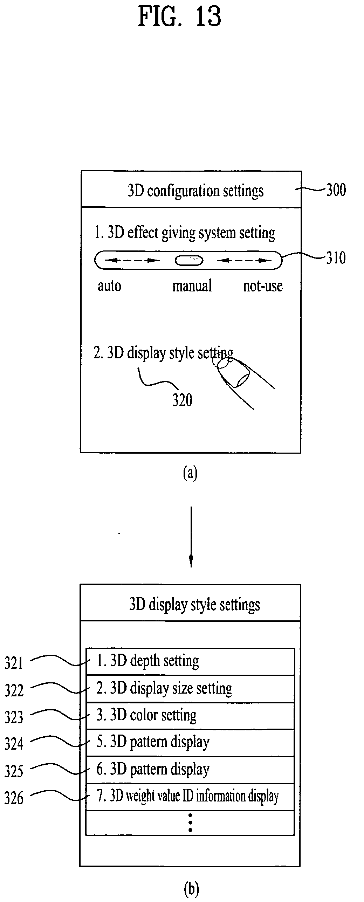

Meanwhile, if the 2^{nd} UI 320 is selected [FIG. 13 (a)], the controller 180 displays a list of a plurality of 3D display style systems 321 to 325, which will be applied in case of giving 3D effect to the objects, [FIG. 13 (b)].

If the system '3D depth setting' 321 is selected from the displayed list, as mentioned in the foregoing description, the controller 180 provides a user with the 3D depth setting window for setting a 3D depth value on each of the objects. The user sets the 3D depth values of the objects to increase or decrease in proportion to an ascending or descending order via the 3D depth setting window or is able to set a 3D depth value in order of each of the objects via the 3D depth setting window.

If the system '3D display size setting' 322 is selected from the displayed list, as mentioned in the foregoing description, the controller 180 provides a user with the 3D display size setting window for setting a display size of each of the objects in case of converting the objects 3-dimensionally. The user sets a display size of each of the objects to increase or decrease in proportion to an ascending or descending order via the 3D display size setting window or is able to set a display size in order of each of the objects via the 3D depth setting window.

If the system '3D color setting' 323 is selected from the displayed list, as mentioned in the foregoing description, the controller 180 provides a user with the 3D color setting window for setting a color of each of the objects in case of converting the objects 3-dimensionally.

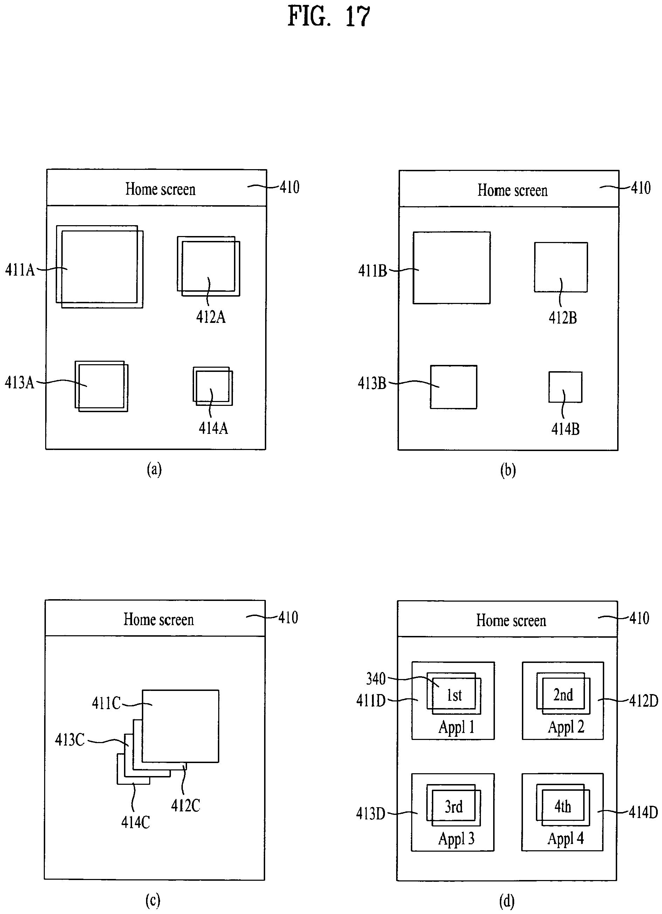

If the system '3D display style' 324 is selected from the displayed list, as mentioned in the foregoing description, the controller 180 provides a user with the display style setting window for setting a display style of each of the 3D-effect given objects. The '3D display style' set by the user can be the same as described with reference to FIG. 17 and shall be described in detail with reference to FIG. 17 later.

If the system '3D pattern setting' 325 is selected from the displayed list, as mentioned in the foregoing description, the controller 180 provides a user with the 3D pattern setting window for setting a 3D pattern to be given to each of the objects.

If the system '3D weight value identification information' 326 is selected from the displayed list, as mentioned in the foregoing description, the controller 180 does not give the 3D effect to the objects in direct but displays weight value identification information, to which 3D effect is give to indicate orders of the objects, at a position of each of the corresponding objects.

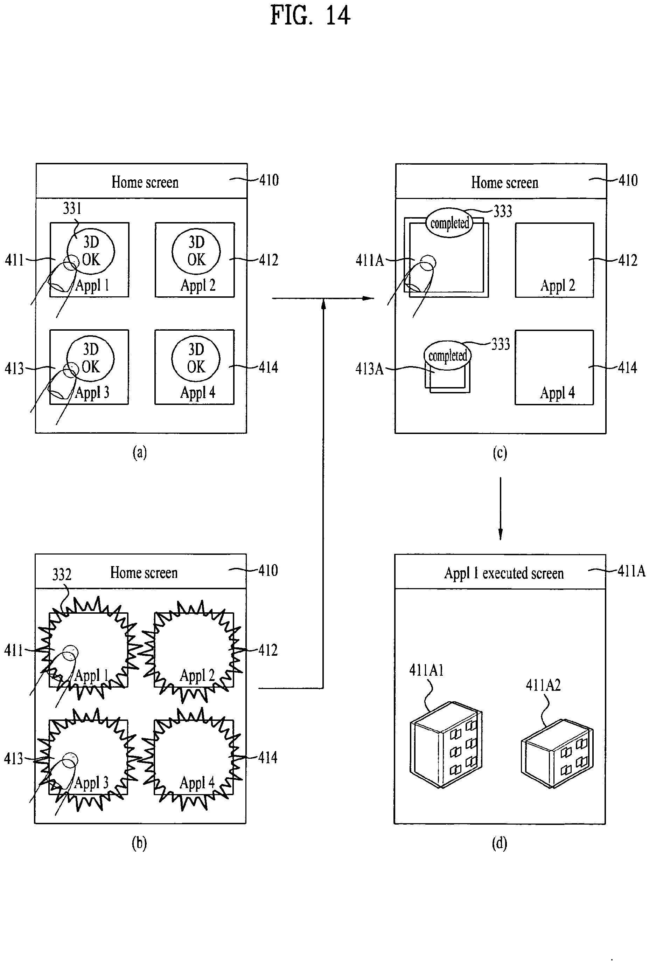

Subsequently, referring to FIG. 14, if a function screen containing a plurality of the objects is displayed, the controller 180 automatically displays 3D markers 331/332 on the corresponding objects to indicate whether 3D effect can be given to the corresponding objects, respectively. If the 3D markers 331/332 are selected, the controller 180 searches the memory 160 for a reference value applicable to the objects corresponding to the selected 3D markers 331/332, recognizes orders of the objects for the found reference value, and is then able to give 3D effect indicating the orders of the objects to the corresponding objects.

If the 3D effect giving to the objects is completed, the controller 180 generates an icon 333 indicating the completed status of the 3D effect giving and then displays the generated icon 333 on each of the 3D effect given objects.

If a command for executing a specific one of the 3D effect given objects is inputted, the controller 180 executes the specific object and is then able to identically give the 3D effect, which is applied to the specific object, to subordinate objects within an executed screen of the specific object.

If a command for executing a specific one of the 3D effect given objects is inputted, the controller 180 executes the specific object. In case that at least two subordinate objects exist within an executed screen of the specific object, the controller 180 applies a reference value, which is applied to the specific object, to the at least two subordinate objects and is then able to give different 3D effects to the contents to discriminate weight value orders of the subordinate objects for the reference value, respectively.

For instance, referring to FIG. 14 (a) and FIG. 14 (b), if a home screen 410 containing a plurality of applications 411 to 414 is displayed, the controller 180 recognizes whether 3D effect can be given to each of the applications 411 to 414.

In particular, the controller 180 recognizes whether left and right eye images for the 3D conversion of the applications 411 to 414 exist in the memory 160. If the left and right eye images for the applications 411 to 414 exist in the memory 160, the controller 180 determines that the 3D effect can be given to the applications 411 to 414.

As mentioned in the above description, if the 3D conversion of the applications 411 to 414 is possible, the controller 180 displays 3D marker 331/332, as shown in FIG. 14 (a)/FIG. 14 (b), to indicate that the 3D effect giving is possible.

In particular, FIG. 14 (a)/FIG. 14 (b) shows that the 3D marker 331/332 is displayed at a position of each of the objects 411 to 414 available for the 3D conversion. More specifically, FIG. 14 (a) shows that the 3D marker 331 is an icon. FIG. 14 (b) shows that the 3D marker 332 is represented as a graphic of blinking effect.

If the 3D marker 331/332 marked on a specific application is selected, the controller 180 is able to convert the selected specific application 3-dimensionally using the left and right eye images, which are provided to the memory 160, corresponding to the selected specific application.

If at least two 3D markers 331/332 are selected, the controller 180 searches the memory 160 for a reference value applicable to the applications 411 and 413 corresponding to the selected 3D markers 331/332, recognizes weight value orders of the applications 411 and 413 for the found reference value, and then gives 3D effects 411A and 413A to the applications 411 and 413 to indicate the weight value orders of the applications 411 and 413, respectively [FIG. 14A (c)].

In brief, if one of the 3D markers is selected, the controller 180 3-dimensionally converts one object corresponding to the selected 3D marker. If at least two of the 3D markers are selected, the controller gives 3D effects to at least two objects, which correspond to the selected 3D markers, in accordance with weight value orders for a corresponding reference value, respectively.

If the 3D effect giving of the applications 411A and 413A is completed, referring to FIG. 14 (b), the controller 180 generates and displays an icon 333 indicating a 3D effect giving completed status of each of the 3D effect giving completed applications 411A and 413A, thereby informing a user of the 3D effect giving completed statuses of the applications 411A and 413A.

If a specific one (i.e., 1^{st} application 411A) of the 3D effect giving completed applications 411A and 413A is selected, referring to FIG. 14 (d), the controller 180 executes the selected 1^{st} application 411A. In this case, if at least two objects 411A1 and 411A2 exists within an executed screen of the 1^{st} application 411A, the controller 180 applies a reference value, which is applied to the 1^{st} application 411A, to the objects 411A1 and 411A2 and may give different 3D effects to the objects 411A1 and 411A2 to discriminate weight value orders of the objects 411A1 and 411A2 for the reference value, respectively.

For instance, referring to FIG. 14 (d), the 1^{st} application 41A is an augmented reality application, the executed screen of the 1^{st} application 411A is a preview image of an augmented reality camera, and the objects 411A1 and 411A2 are buildings within the preview image.

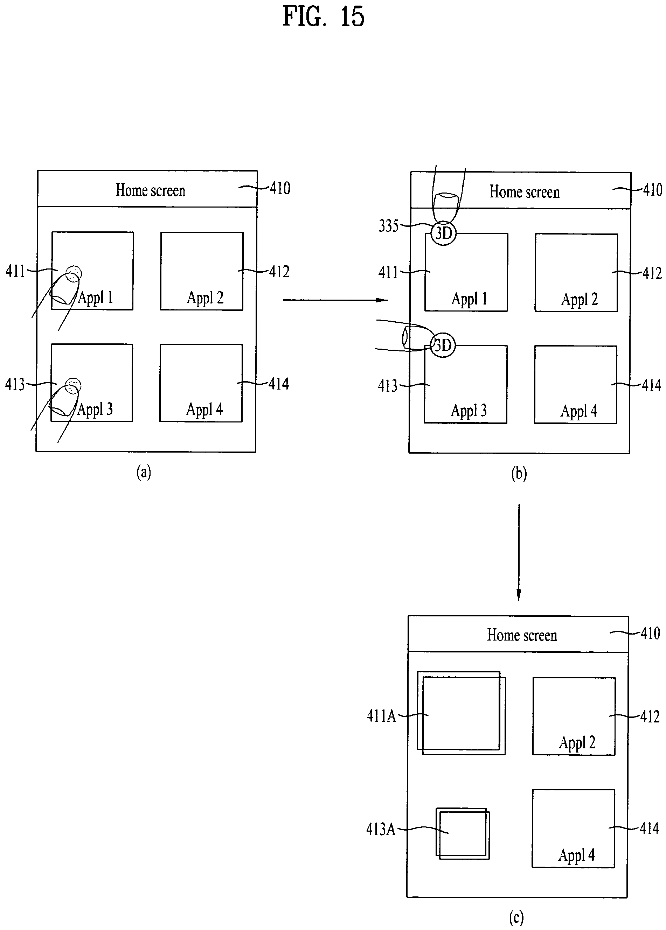

Before the controller 180 gives a 3D effect in accordance with a weight value order of each object within a function screen, as shown in FIG. 15, if at least one object is selected by a preset system, the controller 180 3-dimensionally converts the selected at least one object. If at least two objects are selected by a preset system, the controller 180 is able to give a 3D effect to each of the selected at least two objects in accordance with a corresponding order for a corresponding reference value.

Referring to FIG. 15, if a long touch is inputted to each of at least two application 411 and 413 within a home screen 410 by a preset system [FIG. 15 (a)], the controller 180 displays icons 335 for giving 3D effects to the applications 411 and 413 at positions of the applications 411 and 413, respectively.

If the icons 335 are selected, respectively, the controller 180 searches the memory 160 for a reference value applicable to the applications 411 and 413 corresponding to the selected icons 335, recognizes weight value orders of the applications 411 and 413 for the found reference value, and then gives 3D effects 411A and 413A, which indicate the weight value orders of the applications 411 and 413, to the applications 411 and 413, respectively [FIG. 15 (c)].

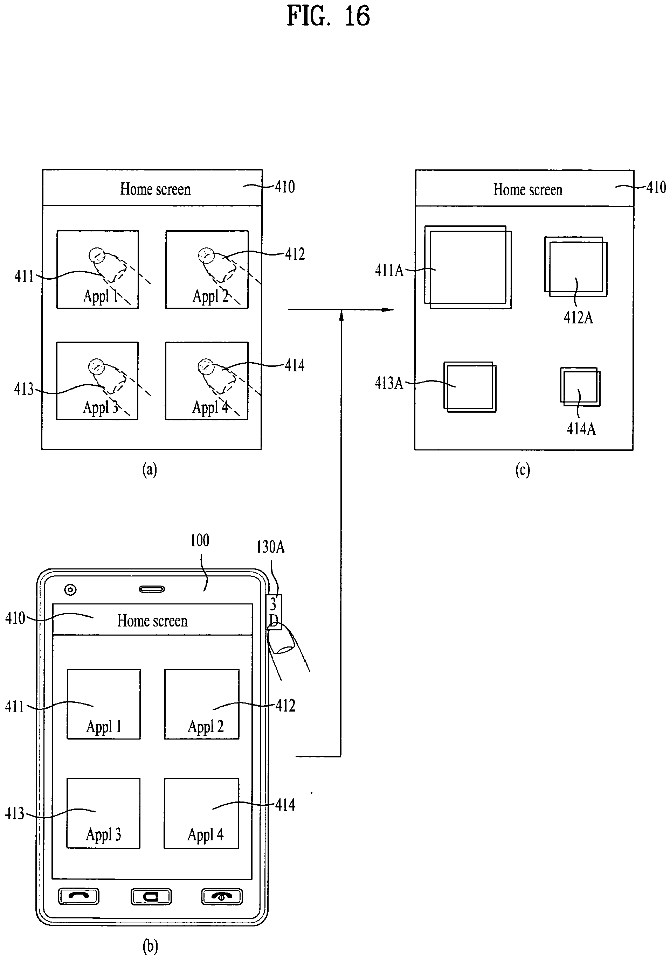

FIG. 16 shows a process for giving 3D effects to objects in accordance with a user selection or giving 3D effects to objects within a function screen in accordance with an input of a 3D effect giving key 130A provided to the mobile terminal 100.

For instance, referring to FIG. 16, if at least two or more applications 411 to 414 are selected from a home screen 410 [FIG. 16 (a)], the controller 180 searches the memory 160 for a reference value applicable to the selected applications 411 to 414, recognizes weight value orders of the applications 411 to 414 for the found reference value, and then gives 3D effects 411A to 414A indicating the weight value orders of the applications 411 to 414 to the applications 411 to 414, respectively [FIG. 16 (c)].

For another instance, when a 3D effect giving key 130A, to which a function of weight value acquisition of applications 411 to 414 for a preset reference value and a function of giving a 3D effect indicating an recognized weight value order are assigned, is provided to one side of the mobile terminal 100, if the 3D effect giving key 130A is inputted [FIG. 16 (b)], the controller 180 gives 3D effects 411A to 414A indicating the weight value orders of the applications 411 to 414 to the applications 411 to 414, respectively [FIG. 16 (c)].

Optionally, the 3D effect giving key 130A can be provided on the display unit 151 of a touchscreen type as a touch icon. In particular, if the 3D effect giving key 130A of the touch icon type is touches, the controller 180 gives 3D effects 411A to 414A indicating the weight value orders of the applications 411 to 414 to the applications 411 to 414, respectively.

FIG. 17 shows a 3D effect system for discriminating orders of objects. For instance, referring to FIG. 17, a home screen 410 containing a plurality of applications (e.g., 1^{st} to 4^{th} applications 411 to 414) is displayed. When a reference value of the 1^{st} to 4^{th} applications 411 to 414 is 'use frequency', weight value orders for the reference value 'use frequency' correspond to 1^{st} application 411 > 2^{nd} application 412 > 3^{rd} application 413 > 4^{th} application 414.

Referring to FIG. 17 (a), in order for the 1^{st} application 411 having a highest weight value order 411A among the 1^{st} to 4^{th} applications 411 to 414 to be seen closest to a user, the controller 180 gives a biggest 3D depth value to the 1^{st} application 411. The controller 180 gives a 3D depth value 412A smaller than that of the 1^{st} application 411 to the 2^{nd} application 412 having a weight value order next to that of the 1^{st} application 411. The controller 180 gives a 3D depth value 413A smaller than that of the 2^{nd} application 412 to the 3^{rd} application 413 having a weight value order next to that of the 2^{nd} application 412. And, in order for the 4^{th} application 414 having a lowest weight value order among the 1^{st} to 4^{th} applications 411 to 414 to be seen farthest from the user, the controller 180 gives a smallest 3D depth value 414A to the 4^{th} application 414.

Referring to FIG. 17 (b), in order for the 1^{st} application 411 having a highest weight value order 411A among the 1^{st} to 4^{th} applications 411 to 414 to be seen biggest to a user, the controller 180 displays the 1^{st} application 411 in a biggest size 411B. The controller 180 displays the 2^{nd} application 412 having a weight value order next to that of the 1^{st} application 411 in a size 412B smaller than that of the 1^{st} application 411. The controller 180 displays the 3^{rd} application 413 having a weight value order next to that of the 2^{nd} application 412 in a size 413B smaller than that of the 2^{nd} application 412. And, in order for the 4^{th} application 414 having a lowest weight value order among the 1^{st} to 4^{th} applications 411 to 414 to be seen smallest to the user, the controller 180 displays the 4^{th} application 414 in a smallest size 414B.

Referring to FIG. 17C, the controller 180 displays the applications 411 to 414 in a manner of stacking shapes of the applications 411 to 414 on one another in higher order for the reference value 'use frequency'.

In particular, in order for the 1^{st} application 411 having a highest weight value order 411A among the 1^{st} to 4^{th} applications 411 to 414 to be best identified by a user, the controller 180 displays the 1^{st} application 411 on a top position 411C. The controller 180 displays the 2^{nd} application 412 having a weight value order next to that of the 1^{st} application 411 on a position 412C beneath the 1^{st} application 411. The controller 180 displays the 3^{rd} application 413 having a weight value order next to that of the 2^{nd} application 412 on a position 413C beneath the 2^{nd} application 412. And, the controller 180 displays the 4^{th} application 414 having a lowest weight value order among the 1^{st} to 4^{th} applications 411 to 414 on a bottom position 414C.

In brief, the user is able to discriminate the weight value orders of the applications 411 to 414 through the stacked sequence of the applications 411 to 414.

Referring to FIG. 17 (d), the controller 180 does not give a 3D effect for weight value order discriminate to each of the applications 411 to 414 in direct but displays a weight value identification information 340, which indicates a weight value order of each of the applications 411 to 414, on each of the applications 411 to 414. In particular, a user is able to discriminate the weight value orders of the applications 411 to 414, which correspond to the weight value identification information 340, through the weight value identification information 340 displayed on positions of the applications 411 to 414, respectively. In this case, 3D effects given to the weight value identification information 340 can be identical to the former 3D effects given to the applications 411 to 414, respectively.

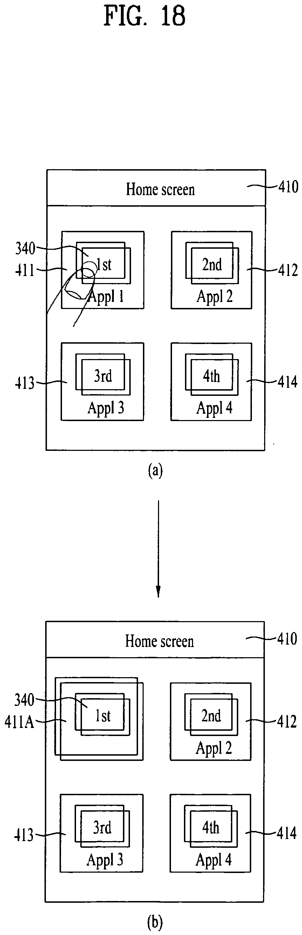

So far, the steps S110 to S150 shown in FIG. 10 are described in detail with reference to FIGs. 11 to 17. In the following description, the steps S160 to S180 shown in FIG. 10 are explained in detail with reference to FIGs. 18 to 30.

First of all, referring now to FIG. 10, while the 3D effects are given to the objects to indicate the weight value orders of the objects by the steps S110 to S150, respectively, the controller 180 detects whether a specific object is selected [S160].

If the controller 180 detects that the 3D effect given specific object is selected, the controller 180 controls an operation related to the selected specific object [S180]. For instance, referring to FIG. 18, if the weight identification information 340 is selected, the controller 180 is able to perform an operation of giving the 3D effect to the object 411 corresponding to the selected weight value identification information 340.

In particular, like FIG. 17 (d), FIG. 18 (a) shows that the weight value identification informations 340, to which 3D effects for indicating weight value orders of the applications 411 to 414 are given, are displayed on the applications 411 to 414, respectively.

If the weight value identification information 340 displayed at the position of the 1^{st} application 411 is selected, referring to FIG. 18 (b), the controller 180 3-dimensionally converts the 1^{st} application 411 or is able to give the 3D effect to the 1^{st} application 411.

In doing so, the controller 180 performs the 3D conversion in a manner of giving a preset 3D effect to the 1^{st} application 411 or giving the 3D effect given to the weight value identification information 340 to the 1^{st} application 411 identically.

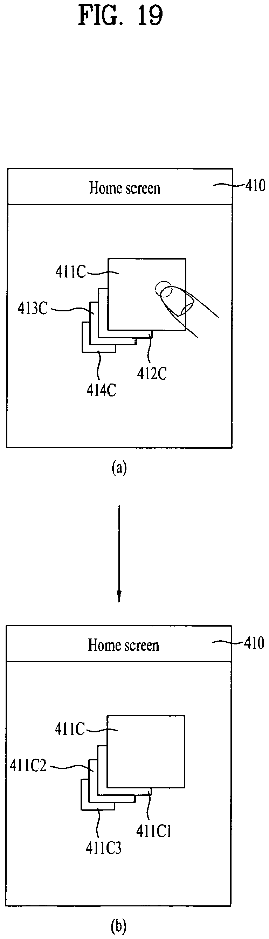

Referring to FIG. 19, if a specific 3D effect given object is selected, the controller 180 searches for at least one or more different objects associated with the selected object and then displays the found different objects. If a reference value of the selected object is applicable to the found different objects, the controller 180 recognizes weight value orders of the different objects for the reference value having the 3D effect given thereto and is then able to give 3D effects indicating the recognized weight value orders to the corresponding different objects, respectively.

In this case, each of the different objects includes an object associated with the selected object or can include an object on an upper or lower layer of the selected object.

In particular, referring to FIG. 19 (a), if a 1^{st} application 411C is selected from applications, to which 3D effects are given in accordance with weight value orders for a reference value 'use frequency' are given, respectively, for example, the controller 180 searches application provided to the memory 160 for different applications 411C1, 411C2 and 411C3 associated with the selected 1^{st} application 411C.

In this case, the different applications 411C1, 411C2 and 411C3, with which the selected 1^{st} application 411C is associated, can have functions of the same category. For instance, assume that the 1^{st} application 411C selected in FIG. 17 is a 1^{st} video player - 411C providing 'video play function of avi format'. And, assume that the different applications 411C1, 411C2 and 411C3, with which the 1^{st} video player 411C is associated, in the memory 160 include a 2^{nd} video player 411C1 providing 'video play function of MP4 format', a 3^{rd} video player 411C2 providing 'video play function of MOV format', and a 4^{th} video player 411C3 providing 'video play function of WMV format', respectively.

In particular, if the 2^{nd} to 4^{th} video players 411C1, 411C2 and 411C3 associated with the 1^{st} video player 41C are found from the memory 160, the controller 180 recognizes orders of the 1^{st} to 4^{th} video players 411C, 411C1, 411C2 and 411C3 for the reference value 'use frequency' and is then able to give 3D effects indicating the recognize orders to the 1^{st} to 4^{th} video players 411C, 411C1, 411C2 and 411C3 again [FIG. 19 (b)].

In doing so, FIG. 19 (b) shows that the orders of the 1^{st} to 4^{th} video players 411C, 411C1, 411C2 and 411C3 for the reference value 'use frequency' correspond to 1^{st} video player 411C > 2^{nd} video player 411C1 > 3^{rd} video player 411C2 > 4^{th} video player 411C3.

Besides, if the 3D effect given 1^{st} application 41C is selected [not shown in the drawing], the controller 180 searches for superordinate or subordinate objects of the 1^{st} application 411C and then recognizes whether the reference value applied to the 1^{st} application 411C is applicable to the found superordinate or subordinate objects.

If the reference value is applicable to the corresponding superordinate or subordinate objects, the controller 180 recognizes weight values of the superordiante or subordinate objects for the reference value applied to the 1^{st} application 411C and is then able to give a 3D effect indicating the corresponding weight value to each of the recognized superordinate or subordinate objects.

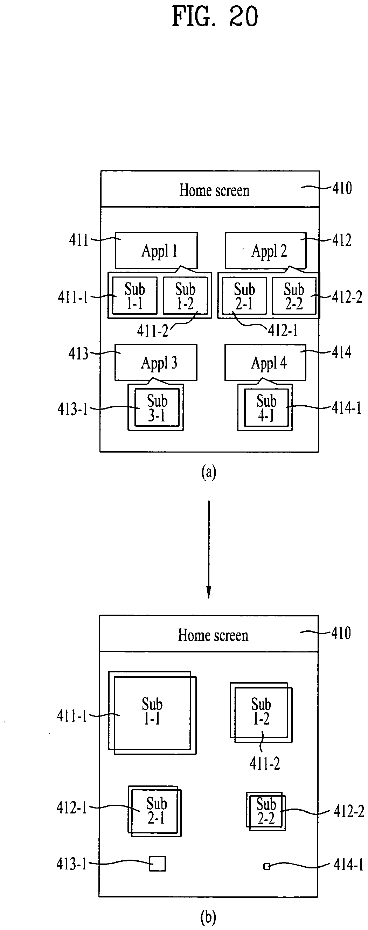

Subsequently, referring to FIG. 20, the controller 180 searches for objects superordinate to objects within the function screen. If a reference value for the objects is applicable to the found subordinate objects, the controller 180 gives 3D effects for indicating weight values of the subordinate objects for the reference value to the subordinate objects and is then able to display the 3D effect given subordinate objects on a single screen.

For instance, the following description with reference to FIG. 20 is made on the following assumptions. First of all, assume that a 1^{st} application 411 is 'Avi file video player'. Assume that subordinate objects of the Avi file video player 411 include 'A.avi' file 411-1 and 'B.avi' file 411-2 played by the Avi file video player 411. Assume that a 2^{nd} application 412 is 'MP4 file video player'. Assume that subordinate objects of the MP4 file video player 412 include 'C.mp4' file 412-1 and 'D.mp4' file 412-2 played by the MP4 file video player 412. Assume that a 3^{rd} application 413 is 'MOV file video player'. Assume that subordinate objects of the MOV file video player 413 include 'E.mov' file 413-1 played by the MOV file video player 413. Assume that a 4^{th} application 414 is 'WMV file video player'.

And, assume that subordinate objects of the WMV file video player 414 include 'F.wmv' file 414-1 played by the WMV file video player 414. Moreover, assume that a reference value applied to the 1^{st} to 4^{th} applications 411 to 414 is 'play count frequency'.

Referring to FIG. 20 (a), when a home screen 410 containing the Avi file video player 411, the MP4 file video player 412, the MOV file video player 413 and the WMV file video player 414 is displayed, the controller 180 searches for the A.avi file 411-1 and the B.avi file 411-2, which are the subordinate objects belonging to the Avi file video player 411, the C.mp4 file 412-1 and the D.mp4 file 412-2, which are the subordinate objects belonging to the MP4 file video player 412, the E.mov file 413-1, which is the subordinate object belonging to the MOV file video player 413, and the F.wmv file 414-1, which is the subordinate object belonging to the WMV file video player 414.

Subsequently, the controller recognizes a corresponding weight value order by applying the reference value 'play count frequency' to each of the found A.avi file 411-1 and B.avi file 411-2, the found C.mp4 file 412-1 and D.mp4 file 412-2, the found E.mov file 413-1 and the found F.wmv file 414-1.

Subsequently, referring to FIG. 20 (b), the controller 180 gives a 3D effect indicating the recognized weight value order to each of the A.avi file 411-1 and B.avi file 411-2, the C.mp4 file 412-1 and D.mp4 file 412-2, the E.mov file 413-1 and the F.wmv file 414-1 and then displays the 3D effect given files on a single screen.

In particular, referring to FIG. 20 (b), the controller 180 gives a different 3D depth value to each of the A.avi file 411-1 and B.avi file 411-2, the C.mp4 file 412-1 and D.mp4 file 412-2, the E.mov file 413-1 and the F.wmv file 414-1 in accordance with the weight value order. Occasionally, the controller 180 is able to give one of the 3D effects shown in FIGs. 17 (b) to 17 (d).

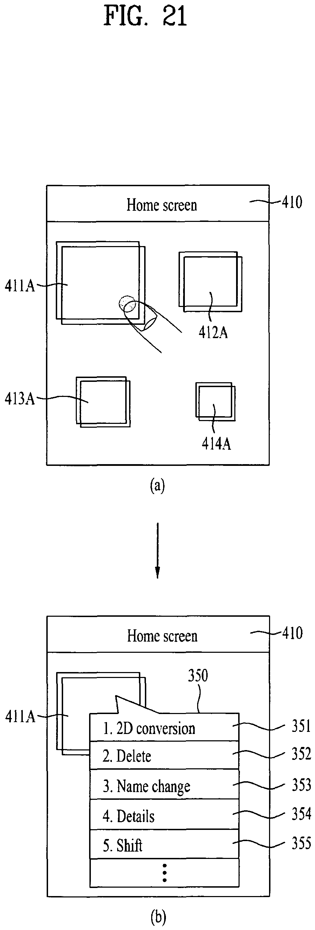

Subsequently, referring to FIG. 21, if the 3D effect given specific object is selected, the controller 180 displays an editing UI 350 providing a function of at least one 3D effect editing to the selected specific object and is then able to apply a 3D editing system set via the editing UI 350 to the corresponding object.

For instance, referring to FIG. 21, if a 1^{st} application 411A, to which a 3D effect is given, is selected from a home screen 410 [FIG. 21 (a)], the controller 180 pages and displays an editing UI 350 providing at least one 3D effect editing to the 1^{st} application 411A [FIG. 21 (b)].

In this case, according to one embodiment, the editing UI 350, as shown in FIG. 21 (b), provides 1^{st} to 5^{th} editing functions 351 to 355. Alternatively, all functions of editing the 3D effect given 1^{st} application 411A can be included in the editing UI 350.

If a user selects the 1^{st} editing function 351 in the editing UI 350, the controller 180 enables the 1^{st} application 411A to return to the 2D status previous to the 3D effect giving.

If a user selects the 2^{nd} editing function 352 in the editing UI 350, the controller 180 deletes the 1^{st} application 411A from the list in the home screen 410 or completely deletes the 1^{st} application 411A from the memory 160.

If a user selects the 3^{rd} editing function 353 in the editing UI 350, the controller 180 displays a name input window of the 1^{st} application 411A. If a new name of the 1^{st} application 411A is inputted via the name input window, the controller 180 gives the inputted name to the 1^{st} application 411A.

If a user selects the 4^{th} editing function 354 in the editing UI 350, the controller 180 recognizes and displays detailed information on the 1^{st} application 411A. In this case, the detailed information on the 1^{st} application 411A can include attribute information, meta information, file size, created data, version information and the like.

If a user selects the 5^{th} editing function 355 in the editing UI 350, the controller 180 displays a shift position setting window for setting a shift position of the 1^{st} application 411A. If a position, to which the 1^{st} application 411A will be shifted, is inputted via the shift position setting window, the controller shifts the 1^{st} application to the set position. In this case, the shift position can include such a position to keep or display the 1^{st} application 411A as a directory position, a folder position, a list position, a menu position and the like for the 1^{st} application 411A.

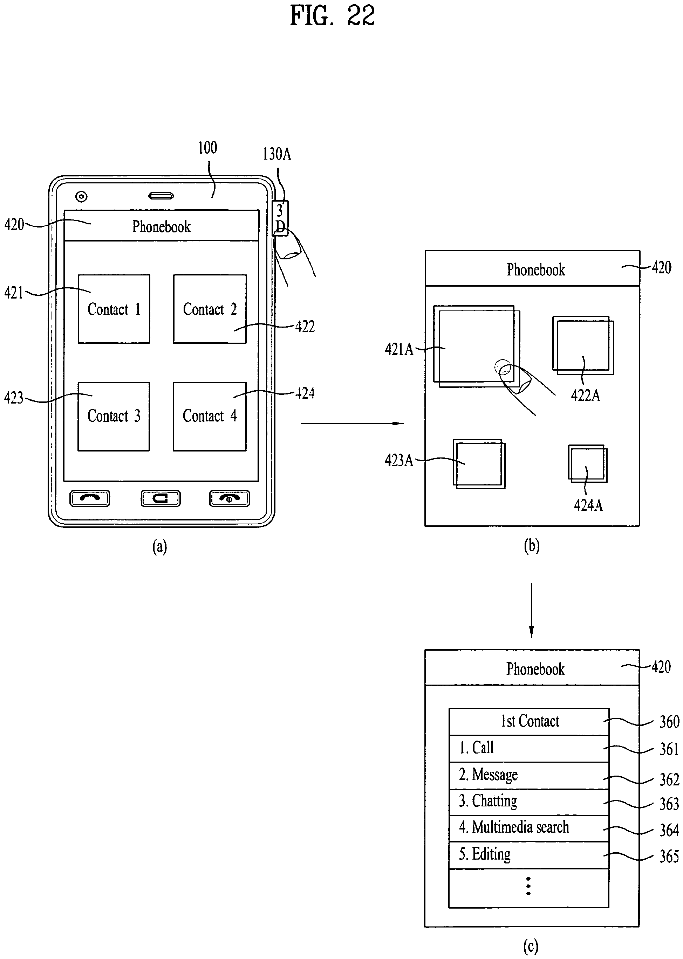

Referring to FIG. 22, if the 3D effect given specific object is selected, the controller 180 searches for functions associated with the selected specific object and is then able to provide a user with a list of the found functions.

For instance, FIG. 22 (a) shows that a phonebook screen 420 containing a plurality of contact information 421 to 424 is displayed. And, FIG. 22 (b) shows that orders for a preset reference value 'use frequency' correspond to 1^{st} contact information 421 > 2^{nd} contact information 422 > 3^{rd} contact information 423 > 4^{th} contact information 424.

Referring to FIG. 22 (b), in order for the 1^{st} contact information 421 having a highest weight value order among the contact information 421 to 424 to be seen closest to a user, the controller 180 gives a biggest 3D depth value to the 1^{st} contact information 421. In order for the 4^{th} contact information 424 having a lowest weight value order among the contact information 421 to 424 to be seen farthest from a user, the controller 180 gives a smallest 3D depth value to the 4^{th} contact information 424.

Thereafter, if the 1^{st} contact information 421 is selected from the contact information 421 to 424 of which weight value orders are discriminated by the 3D effect, the controller 180 searches the functions of the mobile terminal 100 for at least one functions associated with the selected 1^{st} contact information 421 and then displays a list 360 of the found functions [FIG. 22 (c)].

For example, FIG. 22 (c) shows that 1^{st} to 5^{th} functions 361 to 365 are contained in the list 360, by which at least one or more functions associated with the 1^{st} contact information 421 are non-limited by the 1^{st} to 5^{th} functions 361 to 365. In particular, every function associated with or interoperating with the 1^{st} contact information 421 can be included in the list 360.

If the 1^{st} function 361 is selected from the list 360, the controller 180 controls the wireless communication unit 110 to try a call connection to the 1^{st} contact information 421.

If the 2^{nd} function 362 is selected from the list 360, the controller 180 displays a message content writing window for writing a message to send to the 1^{st} contact information 421. If the message to be sent to the 1^{st} contact information 421 is written, the controller 180 sends the written message to the 1^{st} contact information 421 via the wireless communication unit 110.

If the 3^{rd} function 363 is selected from the list 360, the controller 180 executes a chatting application for a chatting with the 1^{st} contact information 421, displays a chatting window for a chatting with a chatting counterpart corresponding to the 1^{st} contact information 421, and then performs a chatting operation with the chatting counterpart corresponding to the 1^{st} contact information 421 via the wireless communication unit 110.

If the 4^{th} function 364 is selected from the list 360, the controller 180 searches the memory 160 for at least one or more multimedia associated with the 1^{st} contact information 421 and then displays the found at least one or more multimedia. In doing so, if one multimedia associated with the 1^{st} contact information 421 is found, the controller 180 directly executes the found multimedia. If at least two multimedia are found, the controller 180 displays a list of the found at least two multimedia.

In doing so, the controller 180 searches the memory 160 for the multimedia associated with such data attached to the 1^{st} contact information 421 as a name, a phone number, an image and the like, which are attached to the 1^{st} contact information 421.

For instance, if the name of the 1^{st} contact information 421 is 'SAM', the multimedia provided in the memory 160 are searched for all multimedia containing the name 'SAM'.

If the 5^{th} function 365 is selected from the list 360, the controller 180 displays a UI for editing the 1^{st} contact information 421 in the memory. If the 1^{st} contact information 421 is edited or modified, the controller 180 enables the 1^{st} contact information 421 to reflect the edited or modified content and then stores the corresponding 1^{st} contact information 421.

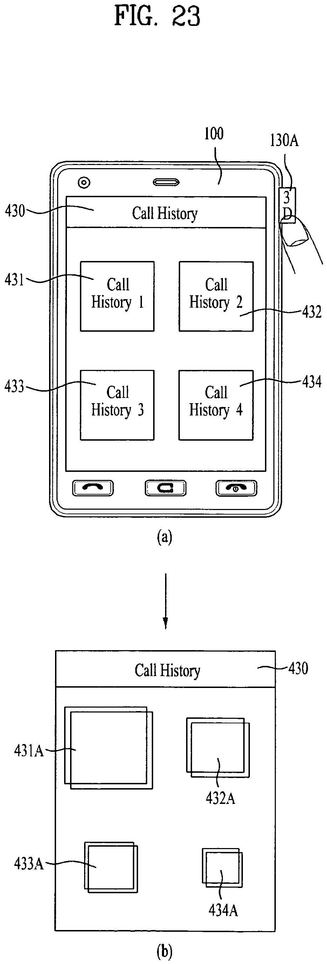

For another instance, referring to FIG. 23, a specific function screen containing a plurality of objects is a call history screen 430 containing a plurality of call history information 431 to 434 [FIG. 23 (a)]. The controller 180 recognizes an order for a preset reference value (e.g., 'call frequency') by one of the processes described with reference to FIGs. 6 to 22 and then gives a 3D effect to each of the call history information 431 to 434 to enable the recognized order to be discriminated [FIG. 23 (b)].

In particular, FIG. 23 (b) shows that the order for the preset reference value 'call frequency' corresponds to 1^{st} call history information 431 > 2^{nd} call history information 432 > 3^{rd} call history information 433 > 4^{th} call history information 434.

Referring to FIG. 23 (b), in order for the 1^{st} call history information 431 having a highest weight value order among the call history information 431 to 434 to be seen closest to a user, the controller gives a biggest 3D depth value to the 1^{st} call history information 431. And, in order for the 4^{th} call history information 434 having a lowest weight value order among the call history information 431 to 434 to be seen farthest from a user, the controller gives a smallest 3D depth value to the 4^{th} call history information 434.

Besides, the controller 180 is able to apply the processes described with reference to FIGs. 14 to 21 to each of the call history information 431 to 434 shown in FIG. 23 [not shown in FIG. 23].

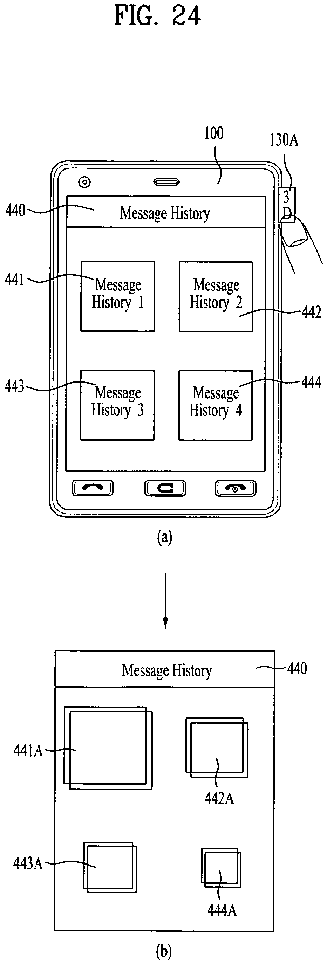

For another instance, referring to FIG. 24, a specific function screen containing a plurality of objects is a message history screen 440 containing a plurality of incoming/outgoing message history information 441 to 444 [FIG. 24 (a)]. The controller 180 recognizes an order for a preset reference value (e.g., 'message sending frequency') by one of the processes described with reference to FIGs. 6 to 22 and then gives a 3D effect to each of the incoming/outgoing message history information 441 to 444 to enable the recognized order to be discriminated [FIG. 24 (b)].

Besides, the controller 180 is able to apply the processes described with reference to FIGs. 14 to 21 to each of the incoming/outgoing message history informations 441 to 444 shown in FIG. 24 [not shown in FIG. 24].

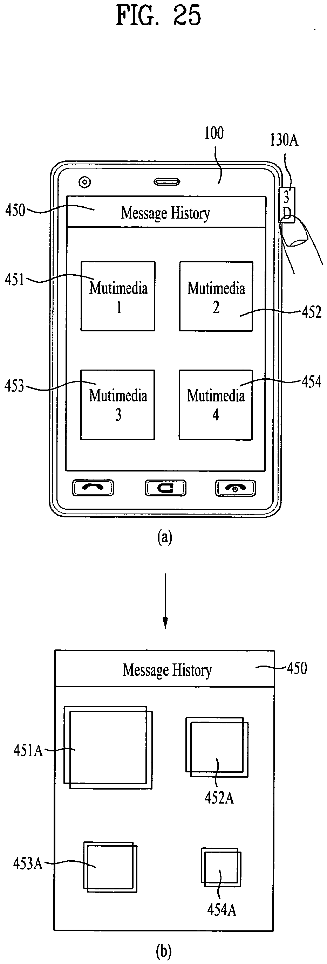

For another instance, referring to FIG. 25, a specific function screen containing a plurality of objects is a multimedia menu screen 450 containing a plurality of multimedia menu 451 to 454 [FIG. 25 (a)]. The controller 180 recognizes an order for a preset reference value (e.g., 'use frequency') by one of the processes described with reference to FIGs. 6 to 22 and then gives a 3D effect to each of the multimedia 451 to 454 to enable the recognized weight value order to be discriminated [FIG. 25 (b)].

Besides, the controller 180 is able to apply the processes described with reference to FIGs. 14 to 21 to each of the multimedia 451 to 454 shown in FIG. 25 [not shown in FIG. 25].

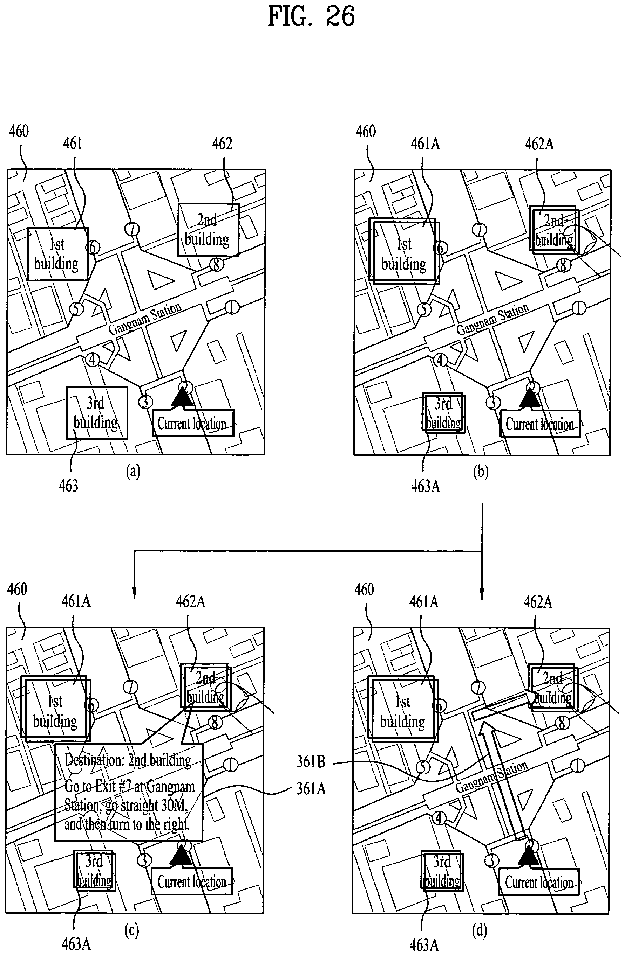

For another instance, referring to FIG. 26, a specific function screen containing a plurality of objects is a map screen 460 containing a plurality of target objects 461 to 463 [FIG. 26 (a)]. The controller 180 recognizes a weight value order for a preset reference value (e.g., 'proximity distance') by one of the processes described with reference to FIGs. 6 to 22 and then gives a 3D effect to each of the target objects 461 to 463 to enable the recognized weight value order to be discriminated [FIG. 26 (b)].

If a 2^{nd} target object 462A is selected from the target objects 461A to 463A of which weight value orders are discriminated by the 3D effect, the controller 180 recognizes a moving path between the mobile terminal 100 and the selected 2^{nd} target object 462A and then displays an information 361A/361B indicating the recognized moving path [FIG. 26 (c)/FIG. 26 (d)].

In particular, referring to FIG. 26 (c) and FIG. 26 (d), the controller 180 recognizes a location information on the selected 2^{nd} target object 462A from map data provided to the memory 160, recognizes a current location information of the mobile terminal 100 via the position location module 115, recognizes the moving path from the mobile terminal 100 to the 2^{nd} target object 462A based on the location information of the 2^{nd} target object 462A and the current location information of the mobile terminal 100, and is then able to generate and display the information 361A/361B indicating the recognized moving path.

In this case, FIG. 26 (c) shows the information 361A indicating the moving path in a manner that the moving path from the mobile terminal 100 to the 2^{nd} target object 462A is displayed as a text on the map screen 460.

And, FIG. 26 (d) shows the information 361B indicating the moving path in a manner that the moving path from the mobile terminal 100 to the 2^{nd} target object 462A is directly guided on the map screen 460.

Besides, the controller 180 is able to apply the processes described with reference to FIGs. 14 to 21 to each of the target objects 461 to 463 shown in FIG. 26 [not shown in FIG. 26].

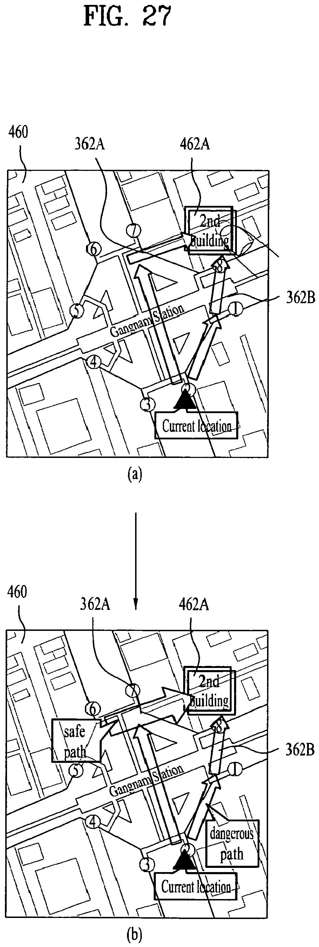

FIG. 27 (a) shows that at least two moving paths (e.g., 1^{st} moving path 362A and 2^{nd} moving path 362B) between the mobile terminal 100 and the 2^{nd} target object 462A are displayed on the map screen 460 by the process shown in FIG. 26.

Referring to FIG. 27 (b), the controller 180 recognizes a weight value order of a safer one of the 1^{st} moving path 362A and the 2^{nd} moving path 362B by setting a reference value to such an information received via the wireless communication unit 110 as a disaster broadcast, an accident news and the like based on the disaster broadcast, the accident news and the like. The controller 180 is then able to give a 3D effect to each of the 1^{st} moving path 362A and the 2^{nd} moving path 362B to enable the recognized weight value orders of the 1^{st} moving path 362A and the 2^{nd} moving path 362B to be discriminated.

In this case, FIG. 27 (b) shows that the weight value orders for the reference value 'disaster broadcast and accident news' correspond to 1^{st} moving path 362A > 2^{nd} moving path 362B.

Moreover, referring to FIG. 27 (b), in order for the 1^{st} moving path 362A having a highest order to be seen closest to a user, the controller 180 gives a biggest 3D depth value to the 1^{st} moving path 362A. And, in order for the 2^{nd} moving path 362B having a lowest order to be seen farthest from a user, the controller 180 gives a smallest 3D depth value to the 2^{nd} moving path 362B.

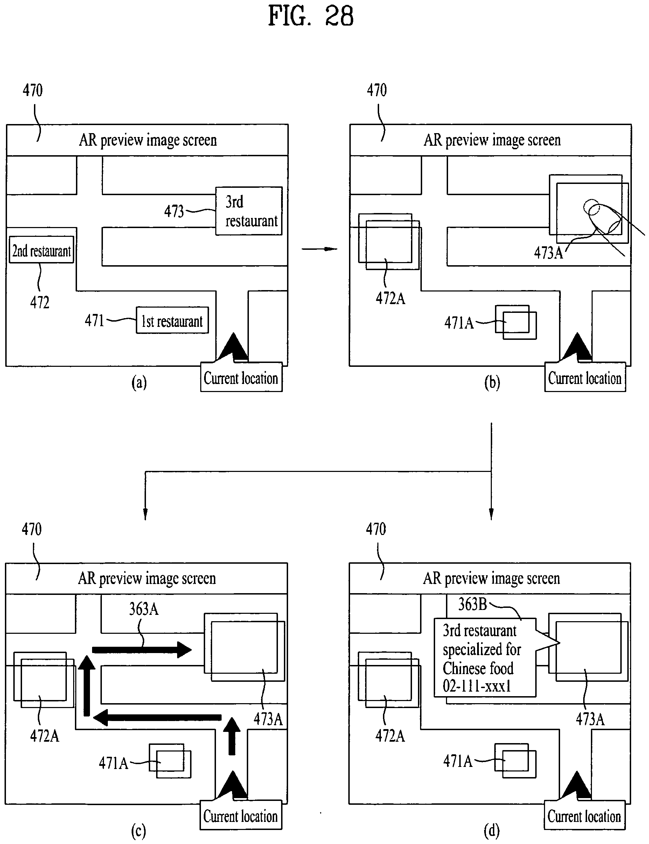

For another instance, referring to FIG. 28, a specific function screen containing a plurality of objects is a preview image screen 470 of an AR (augmented reality) camera 121, in which a plurality of target objects 471 to 473 are contained [FIG. 28 (a)]. The controller 180 recognizes a weight value order for a preset reference value (e.g., 'recommendation count') by one of the processes described with reference to FIGs. 6 to 22 and then gives a 3D effect to each of the target objects 471 to 473 to enable the recognized weight value order to be discriminated [FIG. 28 (b)].

If a 3^{rd} target object 473A is selected from the target objects 471A to 473A of which weight value orders are discriminated by the 3D effect, the controller 180 recognizes a location information on the selected 3^{rd} target object 473A from map data provided to the memory 160, recognizes a current location information of the mobile terminal 100 via the position location module 115, recognizes the moving path from the mobile terminal 100 to the 3^{rd} target object 473A based on the location information of the 3^{rd} target object 473A and the current location information of the mobile terminal 100, and is then able to generate and display the information 363A for guiding the recognized moving path [FIG. 28 (c)].

If the 3^{rd} target object 473A is selected, the controller 180 recognizes an information 363B on the selected 3^{rd} target object 473A from map data provided to the memory 160 or on a web and then displays the recognized information 363B on the 3^{rd} target object 473A [FIG. 28 (d)].

In this case, the information 363B on the selected 3^{rd} target object 473A is the AR information and can include a shop name, a contact, a location, an evaluation point and the like of the 3^{rd} target object 473A.

Besides, the controller 180 is able to apply the processes described with reference to FIGs. 14 to 21 to each of the target objects 471 to 473 shown in FIG. 28 [not shown in FIG. 28].

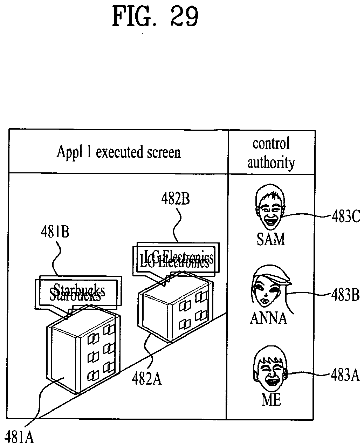

For another instance, FIG. 29 shows that 3D effect is given to target objects 481A and 482B contained in a preview image 480 of an AR camera by the process shown in FIG. 28 and information 481B and 482B of the target objects 481A and 482B to enable weight value orders thereof to be discriminated in accordance with a preset reference value.

In this case, the controller 180 controls the wireless communication unit 110 to share the 3D effect given preview image 480 with preset group members 483B and 483C including a user 483A.

In particular, if the user 483A inputs a command for sharing the preview image 480 with the group members 483B and 483C, the controller 180 controls the wireless communication unit 110 to transmit the preview image 480 to contact information of the designated counterparts 483B and 483C. In doing so, in order for the preview image 480 to be displayed on terminals of the group members 483B and 483C by real time, the controller 180 transmits frames of the preview image 480 via the wireless communication unit 110 by real time.

Each time the preview image 480 is changed by a user's manipulation, the controller 180 is able to transmit the changed preview image 480 to the terminals of the group members 483B and 483C. For example, if the user enlarges the preview image 480, the controller 180 transmits the enlarged preview image 480 to the terminals of the group members 483B and 483C.

In case of receiving a signal for requesting a remote control grant of the preview image 480 from a terminal of a specific group member, the controller 180 displays a query window for inquiring a user whether to grant a remote control by the specific group member. If the user grants the remote control via the query window, the controller 180 grants the remote control of the preview image 480 by the specific group member.

In case of receiving a signal for the remote control of the preview image 480 from the terminal of the specific group member via the wireless communication unit 110, the controller 180 controls the preview image 480 to reflect an operation corresponding to the received remote control signal and then transmits the preview image 480 reflecting the remote control operation to the terminals of the group members 483B and 483C.

For instance, in case of receiving a signal for displaying an information 481B of a 1^{st} building 481A within the preview image 480 from the terminal of the specific group member, based on a current location of the mobile terminal 100 and map data provided to the memory 160, the controller 180 finds and displays the information 481B of the 1^{st} building 481A and then transmits the preview image 480 having the information 481B of the 1^{st} building 481B displayed thereon to the terminals of the group members 483B and 483C.

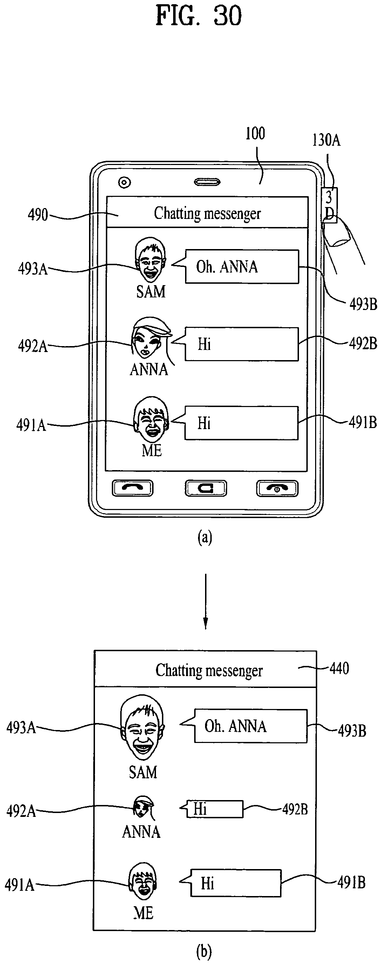

For further instance, referring to FIG. 30, a specific function screen containing a plurality of objects is a chatting screen 480 containing a user 481A and at least two chatting counterparts 482A and 483A [FIG. 30 (a)]. The controller 180 recognizes a weight value order for a preset reference value (e.g., 'chatting count') by one of the processes described with reference to FIGs. 6 to 22 and then gives a 3D effect to each of the chatting counterparts 482A and 483A to enable the recognized weight value order to be discriminated [FIG. 30 (b)].

In this case, FIG. 30 (b) shows that the orders for the reference value 'chatting count' correspond to chatting counterpart SAM 483A > chatting counterpart ANNA 482A.

Moreover, referring to FIG. 30 (b), in order for an image and chatting content 483A of the chatting counterpart SAM 483A having a highest weight value order to be seen closest to a user, the controller 180 gives a biggest 3D depth value to the image and chatting content 483A of the chatting counterpart SAM 483A. And, in order for an image and chatting content 482B of the chatting counterpart ANNA 482A having a highest weight value order to be seen farthest from a user, the controller 180 gives a smallest 3D depth value to the image and chatting content 482B of the chatting counterpart ANNA 482A.

Besides, the controller 180 is able to apply the processes described with reference to FIGs. 11 to 22 to each of the chatting counterparts 482A and 483A shown in FIG. 30 [not shown in FIG. 30].

Accordingly, one or more embodiments described herein recognize weight values of data contained in a screen of a specific function in accordance with a user-specific reference and then gives 3D effects indicating the recognized weight values of the objects to the corresponding objects, respectively, thereby enabling a user to quickly discriminate the objects corresponding to the user-specific reference via the 3D effects.

Also, one or more of the embodiments described herein may be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). And, the computer can include the control unit 180 of the terminal.

In summary, at least one embodiment described herein is directed to a mobile terminal, and controlling method thereof, in which data according to a user-specific reference can be quickly recognized on a screen through 3D effect.

In accordance with one embodiment, a mobile terminal includes a display unit configured to display a function screen including a plurality of objects, a memory provided with at least one reference value referred to weight value recognition of the objects, and a controller configured to recognize weight values of the objects for the reference value, the controller configured to give a 3D effect indicating the recognized weight values of the objects to the function screen.

In accordance with another embodiment, a method of controlling a mobile terminal includes the steps of displaying a function screen including a plurality of objects, recognizing weight values of the objects for a reference value previously provided to a memory, and giving a 3D effect indicating the recognized weight values of the objects to the function screen.

In accordance with another embodiment, a terminal comprises a storage area to store a reference value, a screen to display a plurality of objects, and a controller to assign values to the objects based on the reference value and to control display of the objects on the screen using a three-dimensional (3D) effect. The objects are displayed in 3D differently based on the assigned values, and an area adjacent at least one of the objects on the screen is not displayed in 3D.

The objects may be displayed in different 3D depths based on the assigned values and/or in different sizes based on the assigned values. Also, the assigned values may provide an indication of a different priority or order of relevance with respect to the reference value.

Also, the screen may display a window to receive information indicating a type of the objects to be displayed using the 3D effect, and/or a window to allow for input of the reference value. The screen may also display an area which allows for input of a signal indicating a manner in which the objects are to be displayed in 3D.

Also, the screen may display a first option to display the objects in 3D based on a manual input, and a second option to automatically display the objects in 3D.

Also, the controller may control the display of at least one control features to allow for editing of the 3D display of at least one of the objects in the screen. According to one aspect, the screen is a home screen and the objects are different applications available for execution by the terminal. According to another aspect, the screen includes a map and the objects correspond to different target objects in the map. The terminal may be a mobile terminal.

In accordance with another embodiment, a method for controlling a terminal comprises receiving information indicative of a reference value, assigning values for a plurality of objects based on the reference value, and displaying the objects on a screen using a three-dimensional (3D) effect. The objects are displayed in 3D differently based on the assigned values, and an area adjacent at least one of the objects on the screen is not displayed in 3D.

The objects may be displayed in different 3D depths based on the weight values, and/or may be displayed in different sizes based on the weight values. Also, the assigned values may provide an indication of a different priority or order of relevance with respect to the reference value.

Also, the screen may display a window to receive information indicating a type of the objects to be displayed using the 3D effect, and/or may display a window to allow for input of the reference value. According to one aspect, the screen is a home screen and the objects are different applications available for execution by the terminal. The terminal may be a mobile terminal.

In one or more of the aforementioned embodiments, a mobile terminal was used as a specific example. However, in other embodiments, other types of terminals may be used, including but not limited to other types of mobile terminals and also stationary terminals. Examples of these terminals include mobile phones, user equipment, smart phones, DTV, computers, digital broadcast terminals, personal digital assistants, portable multimedia players (PMP) and navigators, just to name a few.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

Any reference in this specification to "one embodiment," "an embodiment," "example embodiment," etc., means that a particular feature, structure or characteristic described in connection with the embodiment is included in at least one embodiment of the invention. The appearances of such phrases in various places in the specification are not necessarily all referring to the same embodiment. Further, when a particular feature, structure or characteristic is described in connection with any embodiment, it is submitted that it is within the purview of one skilled in the art to effect such feature, structure or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100), comprising:
a display unit (151) configured to display a screen including a plurality of objects;
a memory (160) configured to store a reference value referred to weight value recognition of the objects; and
a controller (180) configured to control an operation associated with the objects,
**characterized in that** the controller is configured to recognize weight values of the objects based on the reference value and to assign a three dimensional (3D) effect indicating the recognized weight values of the objects to the screen.

2. The mobile terminal of claim 1,
wherein the controller recognizes weight values of a plurality of objects to be displayed on a screen of an executed function based on the reference value when the function is executed, and assigns the 3D effect indicating the recognized weight values of the objects.

3. The mobile terminal of claim 1,
wherein the controller assigns different 3D depths to the objects based on the recognized weight values or assigns different 3D sizes to the objects based on the recognized weight values.

4. The mobile terminal of claim 1,
wherein the controller generates 3D information for indicating each of the recognized weight values, controls the display unit to display the generated 3D information on the corresponding objects, respectively, and assigns 3D effect of a selected 3D information to the object corresponding to the selected 3D information if the 3D information is selected

5. The mobile terminal of claim 1,
wherein before recognizing the weight values of the objects, the controller recognizes at least one object, which is the reference value applied target and to which the 3D effect can be assigned, among the objects and controls the display unit to display information for identification of the recognized object on the corresponding object.

6. The mobile terminal of claim 1,
wherein the controller searches different objects associated with a selected object in the 3D effect assigned screen if the object is selected, control the display unit to display the searched different objects, recognizes weight values of the searched different objects based on the reference value, assigns the 3D effect indicating the recognized weight values to the different objects.

7. The mobile terminal of claim 1,
wherein the controller searches for subordinate objects of the objects, assigns the 3D effect indicating weight values of the subordinate objects based on the reference value to the subordinate objects if the reference value is applicable to the searched subordinate objects, and controls the display unit to displays the 3D effect assigned subordinate objects.

8. The mobile terminal of claim 1,
wherein the controller controls the display unit to display a user interface (UI) providing at least one 3D effect editing to the objects within the 3D effect assigned screen, and applies the 3D effect edited via the UI to the corresponding object.

9. The mobile terminal of claim 1, wherein:
- the screen is a screen of a specific application including the objects, and
- the objects are different functions available for execution by the application.

10. The mobile terminal of claim 1, wherein:
- the screen is a home screen including the objects, and
- the objects are different applications available for execution by the mobile terminal.

11. The mobile terminal of claim 1, wherein:
- the screen includes a map including the objects, and
- the objects correspond to different target objects in the map.

12. The mobile terminal of claim 1, wherein:
- the screen is a screen of a list or menu including the objects, and
- the objects are different contents available for execution by the list or menu.

13. The mobile terminal of claim 1, wherein:
the screen is a screen of an AR (Augmented Reality) inputted via a camera of the mobile terminal,
the objects are different target objects included in the screen of the AR.

14. The mobile terminal of claim 13, further comprising:
a wireless communication unit configured to transmit an image of the AR to at least one counterpart terminal, and
the controller controls the AR to apply an operation corresponding to a received remote control signal if the remote control signal is received from the at least counterpart terminal via the wireless communication unit, and controls the wireless communication unit to transmit an image of the applied AR to the at least counterpart terminal.

15. A method for controlling a mobile terminal (100), the method comprising:
displaying (S110) a screen including a plurality of objects; and
controlling an operation associated with the objects,
**characterized by** recognizing (S120, S130, S140) weight values of the objects based on a preset reference value if a command for weight value recognition of the objects is inputted; and by
assigning (S150) a three dimensional (3D) effect indicating the recognized weight values of the objects to the screen.
